# EUROPEAN PATENT APPLICATION

(11) **EP 4 825 535 A1**
(43) Date of publication of application: **21.10.2026**
(21) Application number: 24904402.5
(22) Date of filing: 12.12.2024
(51) Int. Cl.: B25J 9/08, B25J 5/00, B25J 9/00, B25J 9/16, B25J 11/00, B25J 19/00, B62D 57/028, H02J 50/00, G05D 1/661

(54) **ROBOT AND METHOD FOR CONTROLLING ROBOT**

(30) Priority: 12.12.2023 KR 20230179401
(71) Applicant: LG Electronics Inc., Yeongdeungpo-gu Seoul 07336 (KR)
(72) Inventor: WOO, Jongjin, Seoul 08592 (KR); HONG, Eulpyo, Seoul 08592 (KR); SIM, Miyoung, Seoul 08592 (KR); PARK, Jeongseop, Seoul 08592 (KR); SUNG, Kijung, Seoul 08592 (KR); HAM, Seaunglok, Seoul 08592 (KR); JIN, Yeonsub, Seoul 08592 (KR); CHUNG, Jinho, Seoul 08592 (KR); CHOI, Dongkyu, Seoul 08592 (KR); KIM, Geonhee, Seoul 08592 (KR)
(74) Representative: Vossius & Partner Patentanwälte Rechtsanwälte mbB
(86) International application number: PCT/KR2024/096829
(87) International publication number: WO 2025/127837

(57) **Abstract**

The present disclosure relates to a robot, the robot comprising: a robot body in which a motor and a battery are accommodated; a pair of leg units provided on the robot body; a pair of wheels rotatably coupled to each of the pair of leg units; and a functional module detachably coupled to the robot body to be moved together with the robot body, wherein a direction in which the robot body enters a robot station in a state of being coupled to the functional module is different from a direction when only the robot body enters the robot station, and during charging, the robot body always faces the outside of the robot station, thereby allowing a user to check a state of the robot and easily issue a command to the robot.

## Description

### [Technical Field]

The present disclosure relates to a robot and a method for controlling a robot. More specifically, the present disclosure relates to a robot and a method for controlling a robot, which are capable of providing various services according to a user's command input.

### [Background Art]

Recently, with the advancement of robot technology, the use of robots is increasing not only in industrial fields but also at home.

Home robots are robots that perform home tasks on behalf of people, such as helping with housework such as cleaning or controlling home appliances, or robots that act as a user's assistant or provide education to the user using artificial intelligence (Al), robots that replace companion animals, etc.

However, conventional home robots have limitations in that they perform only any one of the above functions and may not perform various functions depending on the user's needs or circumstances.

Meanwhile, there are not only robots that perform functions in a state of being fixed at a specific location but also movable mobile robots. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

In the case of such a two-wheeled robot, since balance must be maintained with only two wheels, there is a need to maintain balance in a process of passing obstacles or the like.

Korean Patent Publication No. 10-2023-0133654 (Sep. 19, 2023) discloses a robot in which a functional module can be detachably coupled between a pair of legs.

The robot may additionally perform a function such as cleaning through the functional module.

Such a robot may dock with a charging station to supply power to a robot body and a functional module. In addition, in the case of a cleaning module, there is a need to add a function of automatically collecting dust from a dust bin.

However, when charging stations for charging the robot body and the functional module are respectively used and a station for collecting dust of the cleaning module is used, there is a limitation that space efficiency is reduced.

In this case, in the case of the home robot as described above, since a command can be received from a user even during charging and there is a need to recognize and respond to the user's behavior, the front of the robot needs to be positioned toward the outside of the charging station.

In addition, the functional module may have a nozzle with a lateral width wider than an interval between a pair of wheels to expand a cleaning area. In this case, after the functional module and the robot body are separated, the robot body may become an obstacle, and forward travel of the robot body may be restricted.

Therefore, when both the robot body and the functional module are charged with a single charging station, the robot needs to be placed such that the front of the robot faces the outside of the charging station, and at the same time, there is a difficulty in that the nozzle of the functional module is placed in front of the robot and cannot be charged.

### [Disclosure]

### [Technical Problem]

The present disclosure has been made in efforts to solve the conventional problems as described above and is directed to providing a robot to which a functional module capable of performing a cleaning function can be detachably coupled.

In addition, the present disclosure is directed to providing a robot capable of charging both a functional module and a robot body through a single robot station.

In addition, the present disclosure is directed to providing a robot capable of collecting dust from a dust bin in a functional module through a robot station.

In addition, the present disclosure is directed to providing a robot in which only a robot body can be separately detached to travel as needed.

In addition, the present disclosure is directed to providing a robot in which a front surface of the robot can be exposed during charging.

### [Technical Solution]

To achieve the objects as described above, a robot according to the present disclosure moves forward in a state in which a robot body and a functional module are coupled to each other to dock with a robot station, and then, only the robot body moves backward to come out of the robot station and rotates half a turn. Thereafter, the robot body may move forward to start traveling, or may move backward to re-enter the robot station to be charged.

Specifically, a robot according to the present disclosure includes a robot body in which a motor and a battery are accommodated; a pair of leg units provided on the robot body; a pair of wheels rotatably coupled to each of the pair of leg units; and a functional module detachably coupled to the robot body to be moved together with the robot body, wherein a direction in which the robot body enters a robot station in a state of being coupled to the functional module is different from a direction when only the robot body enters the robot station.

In this case, the robot body may move forward to enter the robot station in a state of being coupled to the functional module.

In addition, the robot body may move backward to enter the robot station in a state of being separated from the functional module.

In addition, a location of the functional module during traveling and a location thereof during charging may be different with respect to the robot body.

That is, the functional module includes a suction nozzle in which a suction port is formed; and a dust bin configured to store dust sucked through the suction nozzle, wherein the suction nozzle is disposed in front of the robot body during traveling, and is disposed behind the robot body during charging.

Meanwhile, the robot station includes a base plate and a lamp configured to generate a light beam, and the robot body may be charged in a state in which the lamp is disposed behind the robot body.

In addition, during charging, a distance between the suction nozzle and the lamp may be shorter than a distance between the dust bin and the lamp.

Meanwhile, to achieve the objects as described above, a method for controlling a robot including a robot body and a functional module detachably coupled to the robot body to be moved together with the robot body includes a travel starting step of the robot body coming out of the robot station in a state in which the functional module is separated; and a robot entering step of the robot body entering the robot station, wherein in the robot entering step, the robot body moves backward to enter the robot station.

In this case, in the travel starting step, the robot body may move backward to come out of the robot station.

Meanwhile, a method for controlling a robot according to an embodiment of the present disclosure may further include a module docking step of entering a robot station in a state in which the robot body and the functional module are coupled to each other to dock the functional module with the robot station before the travel starting step, wherein in the module docking step, the robot body may move forward to dock with the robot station.

In addition, a method for controlling a robot according to an embodiment of the present disclosure may further include a charging step of charging the robot body after the robot entering step, wherein a direction in which the robot body is placed in the charging step and a direction in which the robot body is placed in the module docking step may be different from each other.

In addition, a method for controlling a robot according to an embodiment of the present disclosure may further include a cleaning starting step of the robot body and the functional module coming out of the robot station in a state of being coupled to each other, wherein in the cleaning starting step, the robot body may move backward to come out of the robot station.

In addition, a method for controlling a robot according to an embodiment of the present disclosure may further include a module separating step of separating the robot body from the functional module after the module docking step, whereby only the functional module is charged and the robot body may travel.

In addition, a method for controlling a robot according to an embodiment of the present disclosure may further include a module coupling step of coupling the robot body and the functional module to each other.

### [Advantageous Effects]

As described above, according to the robot of the present disclosure, by rotating a single arm pivotally provided on both sides of the robot body, various operations may be implemented, and functions of the robot may be expanded or changed.

In addition, a functional module may be coupled to a lower side of the robot body according to a user's command or circumstances, and various functions may be performed through the functional module.

In addition, by replacing a robot mask detachably coupled to the robot body, a design of the robot may be changed or a new function may be added.

In addition, since a space in which a functional module is coupled is formed between a pair of wheels and the leg units, there is an advantage in that an overall volume does not significantly increase even in a state in which the robot body and the functional module are coupled to each other.

In addition, when the functional module is coupled to the robot body, the functional module also comes into contact with the ground, thereby easily maintaining balance of the robot.

In addition, with respect to the functional module having a cleaning function, a suction nozzle laterally extended wider than an interval between a pair of leg units is provided, thereby expanding a cleaning area.

In addition, power may be supplied to the functional module with a single robot station, and the robot body may be charged through the functional module.

In addition, by providing a dust collection motor in the robot station and forming a flow path for collecting dust, dust in a dust bin of the functional module may be collected when the functional module docks.

In addition, when cleaning is not required, the robot body may travel separately by being separated from the functional module.

In addition, during charging, the robot body always faces the outside of the robot station, so that a user can check a state of the robot and easily issue a command to the robot.

### [Description of Drawings]

FIG. 1 is a perspective view for describing a robot according to one embodiment of the present disclosure.
FIG. 2 is a front view of the robot according to one embodiment of the present disclosure.
FIG. 3 is a side view of the robot according to one embodiment of the present disclosure.
FIG. 4 is a rear view of the robot according to one embodiment of the present disclosure.
FIG. 5 is a top view of the robot according to one embodiment of the present disclosure.
FIG. 6 is a bottom view of the robot according to one embodiment of the present disclosure.
FIG. 7 is a view for describing a coupling relationship between a robot mask and a robot body in the robot according to one embodiment of the present disclosure.
FIG. 8 is a perspective view for describing a functional module in the robot according to one embodiment of the present disclosure.
FIG. 9 is a view for describing a state in which the robot body is coupled to the functional module in the robot according to one embodiment of the present disclosure.
FIG. 10 is a perspective view for describing a robot station according to one embodiment of the present disclosure.
FIG. 11 is a partially cut-away view of the robot station according to one embodiment of the present disclosure.
FIG. 12 is a block diagram for describing a control configuration of the robot according to one embodiment of the present disclosure.
FIG. 13 is a flowchart for describing a method for controlling a robot according to a first embodiment of the present disclosure.
FIGS. 14A to 14D are views for describing a situation in which the robot body and the functional module are coupled to each other to enter the robot station according to one embodiment of the present disclosure.
FIG. 15 is a view for describing a process in which the robot station collects dust in the dust bin of the functional module according to one embodiment of the present disclosure.
FIG. 16 is a view for describing a situation in which the robot body comes out of the robot station in a state of being separated from the functional module according to one embodiment of the present disclosure.
FIG. 17 is a view for describing a situation in which the robot body travels in a state of being separated from the functional module according to one embodiment of the present disclosure.
FIG. 18 is a view for describing a situation in which the robot body is charged in the robot station according to one embodiment of the present disclosure.
FIG. 19 is a view for describing a situation in which the robot body travels after completing charging according to one embodiment of the present disclosure.
FIG. 20 is a view for describing a situation in which the robot body enters the robot station to be coupled to the functional module according to one embodiment of the present disclosure.
FIG. 21 is a view for describing a situation in which the robot body comes out of the robot station by being coupled to the functional module according to one embodiment of the present disclosure.
FIG. 22 is a flowchart for describing a method for controlling a robot according to a second embodiment of the present disclosure.
FIG. 23 is a flowchart for describing a method for controlling a robot according to a third embodiment of the present disclosure.
FIG. 24 is a flowchart for describing a method for controlling a robot according to a fourth embodiment of the present disclosure.
FIG. 25 is a flowchart for describing a method for controlling a robot according to a fifth embodiment of the present disclosure.
FIG. 26 is a flowchart for describing a method for controlling a robot according to a sixth embodiment of the present disclosure.
FIG. 27 is a flowchart for describing a method for controlling a robot according to a seventh embodiment of the present disclosure.
FIG. 28 is a view for describing a situation in which the robot body and the functional module are coupled to each other to enter the robot station in the method for controlling a robot according to the seventh embodiment of the present disclosure.
FIG. 29 is a view for describing a situation in which the robot body and the functional module are docked with the robot station in the method for controlling a robot according to the seventh embodiment of the present disclosure.
FIG. 30 is a view for describing a situation in which the robot body and the functional module come out of the robot station in the method for controlling a robot according to the seventh embodiment of the present disclosure.
FIG. 31 is a view for describing a situation in which the robot body and the functional module change a direction in the method for controlling a robot according to the seventh embodiment of the seventh embodiment of the present disclosure.

### [Mode for Invention]

Hereinafter, exemplary embodiments of the present disclosure will be described in detail with reference to the accompanying drawings.

Since the present disclosure may have various changes and various embodiments, specific embodiments are shown in the accompanying drawings and specifically described in the detail descriptions. This is not intended to limit the present disclosure to specific embodiments and should be construed to include all modifications, equivalents, and substitutes included in the spirit and technical scope of the present disclosure.

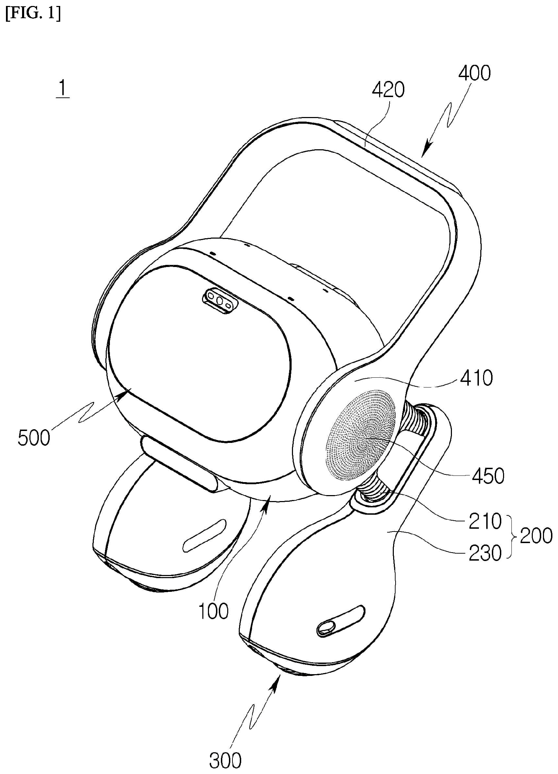

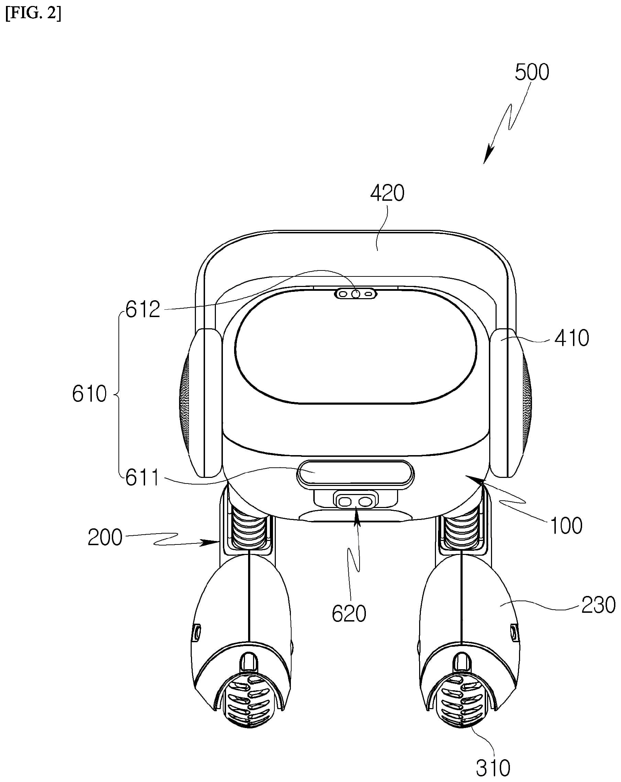

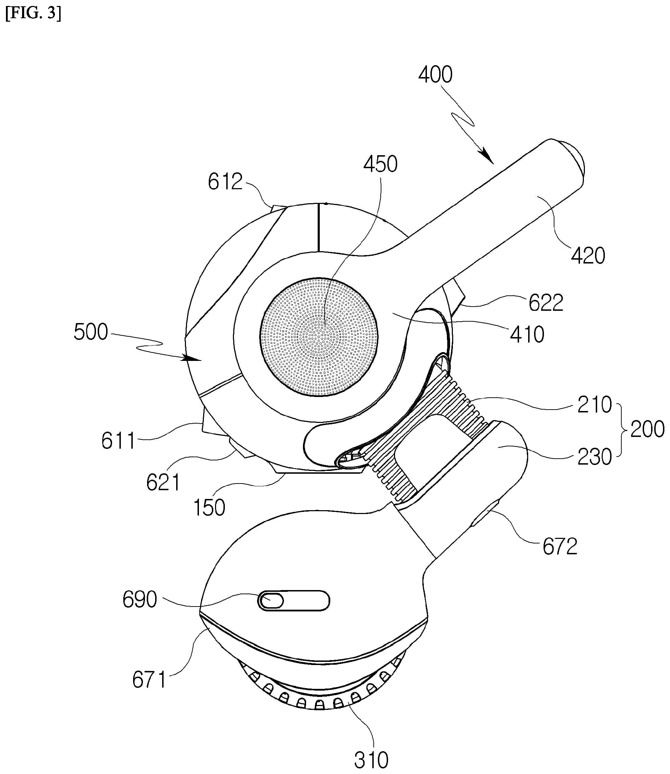

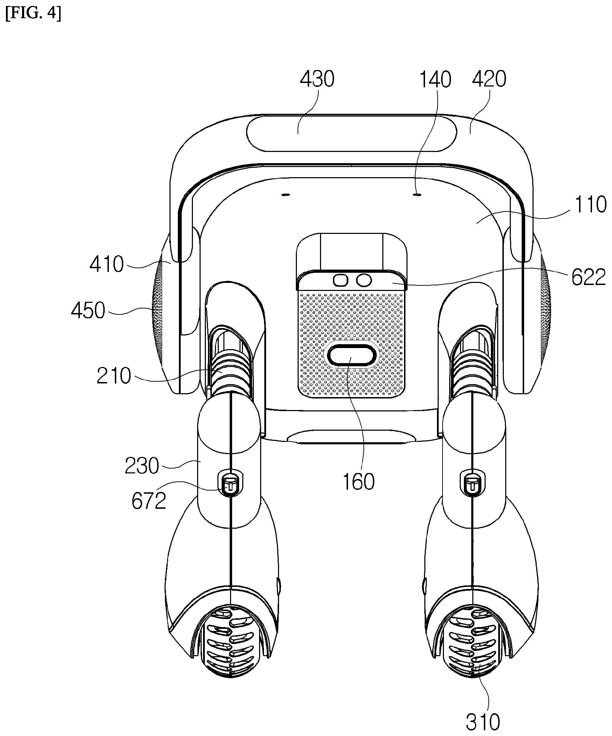

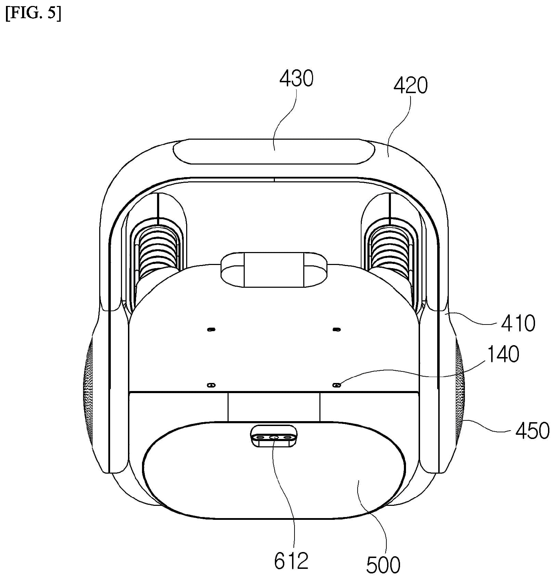

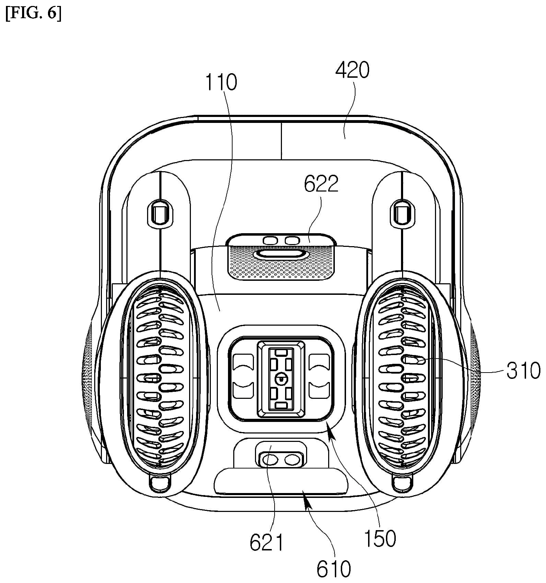

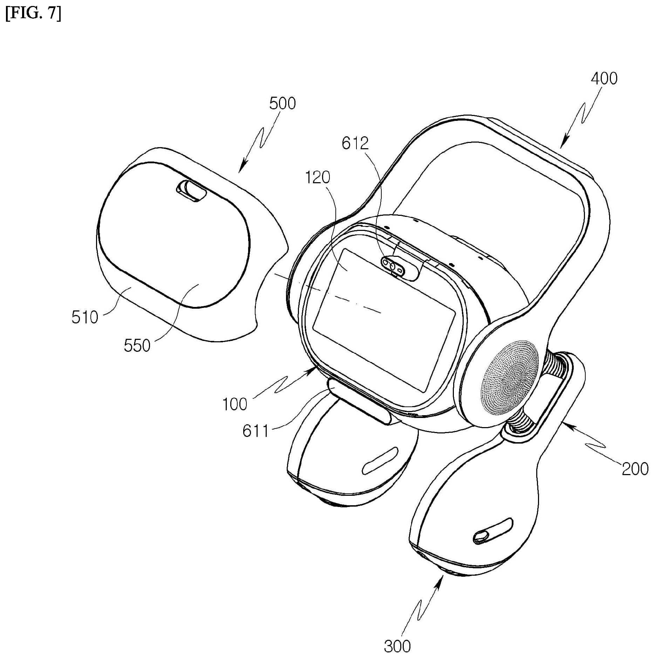

FIGS. 1 to 6 are a perspective view, a front view, a side view, a rear view, a top view, and a bottom view, respectively, for describing a robot according to one embodiment of the present disclosure, and FIG. 7 is a view for describing a coupling relationship between a robot mask and a robot body in the robot according to one embodiment of the present disclosure.

Referring to FIGS. 1 to 6, a robot 1 according to one embodiment of the present disclosure will be described as follows.

The robot 1 according to the embodiment of the present disclosure is placed on a floor to move along the ground B. Accordingly, hereinafter, a vertical direction will be defined and described based on a state in which the robot 1 is placed on the floor.

In addition, a description will be made by setting a side at which an obstacle detection camera 610 to be described below is disposed as a front of the robot 1. In addition, a description will be made by setting a direction opposite to the front as a rear of the robot 1.

A "lowest portion" of each component described in the embodiment of the present disclosure may be a portion of each component that is located to be lowest when the robot 1 according to the embodiment of the present disclosure is used by being placed on the floor, or may be a portion closest to the floor.

The robot 1 according to the embodiment of the present disclosure includes a robot body 100, a leg unit 200, a wheel unit 300, an arm 400, and a robot mask 500. In this case, the leg unit 200 is coupled to the robot body 100, and the wheel unit 300 is coupled to the leg unit 200. In addition, the arm 400 is pivotally coupled to both side surfaces of the robot body 100. In addition, the robot mask 500 is detachably coupled to the robot body 100.

### Robot body

The robot body 100 of the robot 1 according to one embodiment of the present disclosure will be described with reference to FIGS. 1 to 7 as follows.

Components constituting the robot 1 may be coupled to the robot body 100. For example, the robot mask 500 may be detachably coupled to the robot body 100. In addition, the arm 400 is pivotally coupled to the robot body 100. The arm 400 is pivotally coupled to both end portions of the robot body 100. The robot body 100 may implement a waiting posture for power saving or a standing-up posture when falling over through the arm 400. A lower portion of the robot body 100 may be detachably coupled to the functional module 900. The robot body 100 may perform an additional function by being coupled to the functional module 900.

Some components constituting the robot 1 may be accommodated inside the robot body 100.

The body housing 110 may form an exterior of the robot body 100. An internal space of the body housing 110 may accommodate one or more motors including a suspension motor MS, one or more sensors, and a battery 800.

In addition, although not shown, at least one bumper may be provided inside the body housing 110.

The bumper may be provided to move relatively with respect to the body housing 110. For example, the bumper may be coupled to the body housing 110 to reciprocate along a front-rear direction of the body housing 110.

The bumper may be coupled along a portion or the entirety of a front edge of the body housing 110. In addition, the bumper may be disposed at an internal rear side of the body housing 110.

With this configuration, when the robot 1 collides with another object or person, the bumper can protect the robot body 100 and components accommodated inside the robot body 100 by absorbing an impact applied to the robot body 100.

A pair of leg units 200 are coupled to the inside of the body housing 110. The pair of leg units 200 may be exposed to the outside through the body housing 110.

Specifically, the upper leg 210 may be rotatably coupled inside the body housing 110. For example, a link frame (not shown) to which the upper leg 210 is link-coupled may be provided inside the body housing 110.

In addition, the suspension motor MS may be accommodated inside the body housing 110. For example, the suspension motor MS may be disposed on the link frame (not shown). The suspension motor MS may be connected to the upper leg 210.

A pair of leg guide holes may be formed in the body housing 110. For example, the pair of leg guide holes may be formed side by side along the front-rear direction of the body housing 110.

With this configuration, the leg unit 200 may rotatably move along the leg guide holes, and a rotational movement range of the leg unit 200 may be guided.

The body housing 110 may be formed in a shape that has a horizontal width (or a diameter) larger than a vertical height. For example, the body housing 110 may be formed in a shape similar to an ellipsoid.

The robot body 100 may assist the robot 1 to have a stable structure and provide a structure that is advantageous in maintaining balance when the robot 1 moves (travels).

The robot body 100 may be disposed vertically above the wheel 310 to be described later. A load of the robot body 100 may be transmitted to the wheel 310 through the leg unit 200, and the wheel 310 may support the leg unit 200 and the robot body 100. With this configuration, the wheel 310 can stably support the load of the robot body 100.

The robot body 100 may include a display 120. The display 120 may be coupled to the body housing 110. The display 120 may be formed in a flat plate shape. The display 120 may be disposed at a predetermined angle with respect to the ground. For example, the display 120 may be disposed at a location facing frontward and upward. With this configuration, when the robot 1 approaches a user, the display 120 can be made visible to the user when the user looks at the robot 1.

Meanwhile, the display 120 may visually convey information on an operating state of the robot 1 to the user.

The display 120 may be formed of any one device among a light emitting diode (LED), a liquid crystal display (LCD), a plasma display panel, and an organic light emitting diode (OLED).

Information such as operating time information of the robot 1 and power information of the battery 800 may be displayed on the display 120.

According to an embodiment, the display 120 may be an input unit 125. That is, a control command may be input to the display 120 from the user. For example, the display 120 may be a touch screen that visually shows an operating state and receives a control command input from the user.

A facial expression of the robot 1 may be displayed on the display 120. Alternatively, eyes of the robot 1 may be displayed on the display 120. A current state of the robot 1 may be personified and expressed as emotions through a shape of a face or a shape of eyes displayed on the display 120. For example, when the user returns home after going out, a smiling facial expression or a smiling eye shape may be displayed on the display 120. Accordingly, there is an effect that the user can feel a sense of interacting with the robot 1.

A charging terminal may be disposed on the body housing 110. For example, the charging terminal may be disposed to face the ground. As an example, the charging terminal may be disposed to face the ground. As another example, the charging terminal may be disposed at a predetermined angle with the ground. With this configuration, when the robot 1 is coupled to a robot station (not shown), the charging terminal may come into contact with a terminal provided in the robot station (not shown).

The charging terminal may be electrically connected to the robot station (not shown). With this configuration, the robot 1 may receive power through the charging terminal. The power supplied to the charging terminal may be supplied to the battery 800. In addition, the robot 1 may receive an electrical signal through the charging terminal. The electrical signal transmitted through the charging terminal may be received by the controller 700.

A microphone 140 may be disposed on the body housing 110. A plurality of microphones 140 may be disposed on the body housing 110. For example, four microphones 140 may be disposed on an upper side of the body housing 110. With this configuration, the microphones 140 can detect sound coming from various directions and detect the location of a sound source.

A module coupling portion 150 may be disposed at a lower portion of the body housing 110. The module coupling portion 150 is detachably coupled to the functional module 900. Specifically, the module coupling portion 150 may be selectively coupled to or separated from the functional module 900.

As an example, the module coupling portion 150 is configured in the form of an electromagnet, and may selectively apply a magnetic force (attractive force) to the functional module 900 according to the supply of power. As another example, the module coupling portion 150 may be configured to be hook-coupled to a coupling portion 930 of the functional module 900. In this case, coupling force between the robot body 100 and the functional module 900 can be enhanced.

In this case, a connection terminal may be disposed in the module coupling portion 150. With this configuration, the module coupling portion 150 can be coupled to a detachable portion of a metal material (or electromagnet) provided in the functional module 900 at an accurate position, and has an effect of guiding the connection terminal to come into contact with a corresponding terminal provided in the functional module 900 at an accurate position.

The connection terminal may be electrically connected to the functional module 900. The connection terminal may come into contact with and be electrically connected to a corresponding terminal provided in the functional module 900.

With this configuration, power of the robot body 100 can be supplied to the functional module 900 through the connection terminal. In addition, the robot body 100 can transmit and receive electrical signals to and from the functional module 900 through the connection terminal.

Meanwhile, a detailed description of the functional module 900 will be described later.

A manipulation unit 160 may be disposed on the body housing 110. For example, the manipulation unit 160 may be disposed behind the body housing 110.

The manipulation unit 160 can be manipulated by a user, and power of the robot 1 can be turned on/off by manipulating the manipulation unit 160.

The manipulation unit 160 may be provided to be pushable on the body housing 110, or may be provided to pivot in a left-right direction according to an embodiment.

For example, the manipulation unit 160 may be a button. Therefore, in a state in which the power of the robot 1 is turned off, when the user pushes the manipulation unit 160 to press the manipulation unit 160, the power of the robot 1 can be turned on. In addition, in a state in which the power of the robot 1 is turned on, when the user pushes the manipulation unit 160 to press the manipulation unit 160, the power of the robot 1 can be turned off.

Meanwhile, an obstacle detection camera 610 may be disposed in front of the body housing 110. According to an embodiment, a plurality of obstacle detection cameras 610 may be disposed. For example, a first detection camera 611 may be disposed at a front lower portion of the body housing 110, and a second detection camera 612 may be disposed at a front upper portion of the body housing 110. In this case, the obstacle detection camera 610 may be disposed on a center line passing through a center of the body housing 110 in the left-right direction. With this configuration, the obstacle detection camera 610 can detect an object or a person disposed in front of the robot 1.

In addition, an IR sensor 620 may be disposed on the body housing 110. According to an embodiment, a plurality of IR sensors 620 may be disposed. For example, a first IR sensor 621 may be disposed at the front lower portion of the body housing 110, and a second IR sensor 622 may be disposed behind the body housing 110. With this configuration, the IR sensor 620 can detect the location of a light source that generates infrared rays.

The IR sensor 620 may be disposed close to the obstacle detection camera 610. For example, the first IR sensor 621 may be disposed immediately below the first obstacle detection camera 611.

With this arrangement, the IR sensor 620 can detect light irradiated by a lamp of the functional module 900 or a robot station (not shown), and when the robot body 100 approaches the lamp, the obstacle detection camera 610 can detect the shape of the functional module 900 or the robot station (not shown).

### Leg unit

The leg unit 200 of the robot 1 according to one embodiment of the present disclosure will be described with reference to FIGS. 1 to 7 as follows.

The leg unit 200 is coupled to the robot body 100 and may support the robot body 100. For example, a pair of leg units 200 are provided and are each coupled to the inside of the body housing 110. The pair of leg units 200 may be arranged symmetrically (line-symmetrically). At this time, at least a portion of the leg unit 200 is disposed closer to the ground than the robot body 100. Accordingly, the robot body 100 may travel in a state of standing on the ground by the pair of leg units 200. That is, gravity applied to the robot body 100 may be supported by the leg unit 200, and a height of the robot body 100 can be maintained.

The leg unit 200 includes an upper leg 210 and a lower leg 230. In this case, the upper leg 210 is rotatably coupled to the robot body 100 and the lower leg 230.

Meanwhile, although not shown, the upper leg 210 includes a first link and a second link. At this time, the first link and the second link are rotatably coupled to the robot body 100 and the lower leg 230, respectively. That is, the first link and the second link are link-coupled to the robot body 100 and the lower leg 230, respectively.

The first link and the second link are disposed inside an upper link cover and are not exposed to the outside. The upper link cover is formed in a kind of corrugated pipe shape to accommodate the first link and the second link therein, and may be provided to be extendable and contractible in length according to rotation of the upper leg 210.

The first link is link-coupled to both internal left and right sides of the robot body 100.

The first link is connected to the suspension motor MS. For example, the first link may be connected to a shaft of the suspension motor MS directly or through a gear. With this configuration, the first link receives a driving force from the suspension motor MS.

The first link is formed in a frame shape, the suspension motor MS is connected to one side in a longitudinal direction thereof, and the lower leg 230 is coupled to the other side in the longitudinal direction. At this time, one side of the first link connected to the suspension motor MS may be disposed farther from the ground than the other side coupled to the lower leg 230.

One side of the first link is coupled to a leg support portion (not shown) provided inside the body housing 110. The first link may be rotatably coupled to the leg support portion. For example, one side of the first link may be formed in a disk shape or a circular plate shape. Accordingly, one side of the first link may pass through the leg support portion to be connected to the suspension motor MS.

One side of the first link is connected to the suspension motor MS. For example, one side of the first link may be fixedly coupled to a shaft of the suspension motor MS. With this configuration, when the suspension motor MS is driven, one side of the first link may be rotated in conjunction with rotation of the shaft of the suspension motor MS.

The other side of the first link is rotatably coupled to the lower leg 230. For example, a through hole may be formed on the other side of the first link. A shaft may be rotatably coupled through the through hole. Both end portions in the longitudinal direction of the shaft may be coupled to the lower leg 230.

With this configuration, the shaft may be an axis about which the first link and/or the lower leg 230 rotates. Accordingly, the first link and the lower leg 230 may be connected to rotate relatively.

Although not shown, the leg unit 200 may further include a gravity compensator. The gravity compensator compensates for the robot body 100 moving downward vertically due to gravity. That is, the gravity compensator provides force to support the robot body 100.

For example, the gravity compensator may be a torsion spring. The gravity compensator may be wound to wrap around an outer side of an outer circumferential surface of the first link. In addition, one end portion of the gravity compensator may be inserted into and fixedly coupled to the first link, and the other end portion of the gravity compensator may be inserted into and fixedly coupled to the lower leg 230.

The gravity compensator applies force (rotational force) in a direction in which an angle between the first link and the lower leg 230 increases. For example, both end portions of the gravity compensator are contracted in advance to apply a restoring force in a direction in which an angle between the first link and the lower leg 230 increases. Accordingly, even when gravity is applied to the robot body 100 in a state where the robot 1 is placed on the ground, the angle between the first link and the lower leg 230 can be maintained within a predetermined angle range.

With this configuration, even when the suspension motor MS is not driven, the robot body 100 can be prevented from descending toward the ground. Accordingly, there is an effect of maintaining the height of the robot body 100 at a predetermined distance or more from the ground while preventing energy loss due to driving of the suspension motor MS by the gravity compensator.

The second link is link-coupled to both internal left and right sides of the robot body 100. For example, the second link may be link-coupled to a leg support portion (not shown) provided inside the body housing 110. That is, the second link may be coupled together with the leg support portion (not shown) to which the first link is coupled.

The second link is formed in a frame shape, one side in a longitudinal direction thereof is coupled to the leg support portion (not shown), and the other side in the longitudinal direction is coupled to the lower leg 230.

An electric wire may be accommodated in the second link. For example, a space in which an electric wire can be accommodated may be formed inside the second link. Accordingly, power of the battery 800 can be supplied to the wheel unit 300 through the electric wire. In addition, the electric wire can be prevented from being exposed to the outside.

One side of the second link is rotatably coupled to the leg support portion. For example, although not shown, a shaft coupled to the leg support portion may be coupled through one side of the second link. A hollow may be formed in the shaft. An electric wire may pass through the hollow. With this configuration, the electric wire supplying power from the battery 800 to the wheel motor MW can be prevented from being exposed to the outside.

The other side of the second link is rotatably coupled to the lower leg 230. Specifically, the other end portion of the second link is rotatably coupled to the lower leg 230 through a shaft. For example, the other side of the second link may be formed in a disk shape, and the shaft may be coupled therethrough. In addition, both end portions in the longitudinal direction of the shaft may be coupled to the lower leg 230. With this configuration, the shaft may be an axis about which the second link and/or the lower leg 230 rotates. Accordingly, the second link and the lower leg 230 may be connected to rotate relatively.

The lower leg 230 is link-coupled to the first link and the second link, and is coupled to the wheel unit 300.

The lower leg 230 is formed in a frame shape, the first link and the second link are coupled to one side in a longitudinal direction thereof, and the wheel unit 300 is coupled to the other side in the longitudinal direction.

One side in the longitudinal direction of the lower leg 230 is link-coupled to the first link and the second link. For example, a space may be formed on one side of the lower leg 230 to accommodate the first link and the second link. That is, one side of the lower leg 230 may be formed in a shape of a pair of side-by-side frames, and the first link and the second link may be accommodated in a space between the pair of frames.

Here, two shafts may be arranged side-by-side between the pair of frames. That is, both end portions of each of the two shafts may be coupled to the pair of frames. In addition, each of the shafts may pass through the first link and the second link. At this time, the first link may be disposed at a front lower side than the second link. That is, the shaft passing through the first link may be disposed closer to the wheel 310 than the shaft passing through the second link.

Accordingly, the first link and the second link may be coupled to the lower leg 230 to be relatively rotatable, respectively.

The other side in the longitudinal direction of the lower leg 230 is coupled to the wheel unit 300. The other side in the longitudinal direction of the lower leg 230 may be formed to cover at least a portion of the wheel 310. For example, the other side in the longitudinal direction of the lower leg 230 may be formed to cover a rotation center of the wheel 310, and a space in which the wheel 310 can be rotatably accommodated may be formed inside.

In addition, a wheel motor MW may be accommodated inside the other side in the longitudinal direction of the lower leg 230.

With this configuration, the wheel 310 and the wheel motor MW can be accommodated on the other side in the longitudinal direction of the lower leg 230, and the wheel 310 can be rotatably coupled.

Meanwhile, a sensor capable of measuring a distance to the ground may be provided on the other side in the longitudinal direction of the lower leg 230. Specifically, a cliff sensor 670 may be disposed on the lower leg 230. For example, a first cliff sensor 671 may be disposed at a front lower end of the lower leg 230, and a second cliff sensor 672 may be disposed at a rear upper side of the lower leg 230. With this configuration, distances between the lower leg 230 and the wheel 310 and the ground B can be measured. In addition, it is also possible to calculate an angle between the lower leg 230 and the ground through a distance difference between the first cliff sensor 671 and the second cliff sensor 672.

Meanwhile, although not shown, a stopper may be provided on the leg unit 200. The stopper may be disposed inside the body housing 110. The stopper may be disposed adjacent to the rotational coupling portion 410 of the arm 400. For example, the stopper may be disposed inside an inner circumferential surface of the rotational coupling portion 410 formed in a cylindrical shape.

As an example, the stopper may be disposed on the leg support portion (not shown). As another example, the stopper may be disposed on the first link.

The stopper may be formed in a shape protruding toward the rotational coupling portion 410. The stopper may come into contact with and be supported by a rotational protrusion (not shown) of the arm 400 to be described later. For example, the rotational protrusion protruding on the inner circumferential surface of the rotational coupling portion 410 rotates together with rotation of the arm 400, and when the arm 400 rotates to a predetermined position, it may come into contact with the stopper.

With this configuration, when the arm 400 rotates, the stopper can restrict a rotation angle of the arm 400.

Looking at the overall balance by the leg unit 200, the first link and the second link are rotatably coupled to a link frame (not shown) provided inside the robot body 100, and the first link and the second link are link-coupled to the lower leg 230. That is, the robot 1 has a structure of supporting the robot body 100 through a four-bar linkage composed of the link frame (not shown), the first link, the second link, and the lower leg 230.

In addition, the leg unit 200 generates a restoring force in a direction in which the gravity compensator lifts the robot body 100. Accordingly, even in a state where the suspension motor MS is not driven, the pair of leg units 200 can maintain a state in which the robot body 100 is lifted by a predetermined height from the ground.

Meanwhile, in the robot 1 according to the embodiment of the present disclosure, when at least one of the pair of wheels 310 is lifted to pass an obstacle, or when the height of the robot body 100 is lowered for charging or the like, balance can be maintained by driving the suspension motor MS.

When the suspension motor MS is driven, the first link rotates about the motor coupling portion as an axis, so that the link coupling portion moves upward. In addition, the lower leg 230 is moved according to rotation of the first link. In addition, the second link is rotatably moved by being pushed by the lower leg 230. As a result, one end portion of the lower leg 230 may be moved rearward, and the other end portion of the lower leg 230 may be moved upward.

With this configuration, even when the wheel 310 is moved in the vertical direction, a movement range of the wheel 310 in the front-rear direction can be restricted. Accordingly, the robot 1 can stably maintain balance.

Therefore, according to the robot 1 of the present disclosure, there is an effect of being able to pass obstacles with various heights using the four-bar linkage structure.

### Wheel unit

The wheel unit 300 of the robot 1 according to one embodiment of the present disclosure will be described with reference to FIGS. 1 to 8 as follows.

The wheel unit 300 is rotatably coupled to the leg unit 200, and may roll along the ground to move the robot body 100 and the leg unit 200.

The wheel unit 300 includes a wheel 310 that is in contact with the ground and rolls along the ground.

The wheel 310 is provided to have a predetermined radius and a predetermined width along an axial direction. When viewing the robot 1 from the front, at least a portion of the robot body 100 and the leg unit 200 may be disposed vertically above the wheel 310.

Although not shown, the wheel 310 may include a wheel frame formed in a circular shape. The wheel frame may be formed in a cylindrical shape with an open one side facing a shaft of a wheel motor MW. Through this, a weight of the wheel frame can be reduced.

However, when the wheel frame is formed in a cylindrical shape, overall rigidity of the wheel frame may be reduced. In consideration of this, ribs (not shown) for reinforcing rigidity may be formed on each of an inner surface and an outer surface of the wheel frame.

A tire is coupled to an outer circumferential surface of the wheel frame. The tire may be formed in an annular shape with a diameter fitted to the outer circumferential surface of the wheel frame.

Grooves of a predetermined pattern may be recessed in an outer circumferential surface of the tire to increase a grip force of the tire.

In one embodiment, the tire may be made of an elastic rubber material.

The wheel motor MW may provide a driving force to the wheel 310. The wheel motor MW may generate a rotational force by receiving power from the battery 800.

The wheel motor MW may be accommodated inside the other side of the lower leg 230. In addition, the shaft of the wheel motor MW may be coupled to the wheel 310. That is, the wheel motor MW may be an in-wheel motor.

With this configuration, when the wheel motor MW is driven, the wheel 310 may roll along the ground while rotating, and the robot 1 may move along the ground.

### Arm

The arm 400 of the robot 1 according to one embodiment of the present disclosure will be described with reference to FIGS. 1 to 7 as follows.

The arm 400 may be pivotally coupled to both side surfaces of the robot body 100. For example, the arm 400 may refer to a rotating body that is coupled to both ends in an axial direction (longitudinal direction) of the robot body 100 in an ellipsoidal shape and rotates by using both ends in the axial direction of the robot body 100 as a single rotation axis.

Specifically, the arm 400 includes a rotational coupling portion 410 and a connection portion 420.

The rotational coupling portion 410 may be rotatably coupled to both side surfaces of the robot body 100. A pair of rotational coupling portions 410 are provided to be relatively rotatably coupled to both sides in the left-right direction of the robot body 100. At this time, the pair of rotational coupling portions 410 may be rotated in conjunction with each other. That is, the pair of rotational coupling portions 410 are simultaneously rotated, and a magnitude of a rotation angle thereof may be the same. However, when viewed based on the robot body 100, rotation directions of the pair of rotational coupling portions 410 may be opposite to each other. That is, when viewed based on the robot body 100, when the rotational coupling portion 410 on one side rotates clockwise, the rotational coupling portion 410 on the other side may rotate counterclockwise.

The rotational coupling portion 410 may be formed in a shape capable of covering both end portions in the left-right direction of the robot body 100. For example, the rotational coupling portion 410 may be formed in a cylindrical shape having a predetermined thickness. At this time, both end portions in the left-right direction of the robot body 100 may be disposed to face a rotation center of the rotational coupling portion 410.

That is, describing a state in which the rotational coupling portion 410 is coupled to the robot body 100, assuming that the robot body 100 is a human face, the rotational coupling portion 410 may be in a shape similar to a pair of earmuffs or earpieces of headphones.

An arm motor MA may be disposed inside the body housing 110. Alternatively, according to an embodiment, it is also possible that the arm motor MA is disposed inside the rotational coupling portion.

The arm motor MA is connected to the arm 400 to provide a driving force to the arm 400. More specifically, a final output stage of a shaft or gear of the arm motor MA is connected to the rotational coupling portion 410. For example, the shaft of the arm motor MA may be connected to a reducer, and the reducer may be connected to a driven gear.

The reducer includes at least one gear and transmits a rotational force applied from the arm motor MA to the driven gear, and may reduce a rotational speed of the driven gear through a gear ratio. Through this, precise rotation of the arm 400 can be controlled, and the arm 400 can provide a relatively large force.

The driven gear may be coupled to the rotational coupling portion 410 to rotate integrally therewith. The driven gear may mesh with an output stage of the reducer to receive rotational power of the arm motor MA.

With this configuration, when the arm motor MA is operated, the rotational coupling portion 410 may be rotated.

Two arm motors MA may be provided to be connected to the pair of rotational coupling portions 410, respectively. As another example, one arm motor MA may be provided to be connected to any one of the rotational coupling portions 410.

With this configuration, when the arm motor MA is operated, the pair of rotational coupling portions 410 rotate in conjunction with each other, and the connection portion 420 rotates together in accordance with rotation of the rotational coupling portion 410. That is, according to the present disclosure, in the arm 400, the rotational coupling portion 410 and the connection portion 420 may rotate integrally by using an arm shaft of the rotational coupling portion 410 as a rotation axis.

Meanwhile, a speaker 450 may be disposed outside the rotational coupling portion 410. That is, the speaker 450 may be disposed at each of directions opposite to the direction in which the robot body 100 is disposed in the pair of rotational coupling portions 410. Therefore, the speakers 450 may be disposed at locations covering both left and right sides of the body housing 110, respectively.

The speaker 450 may transmit information of the robot 1 as sound. A source of sound transmitted by the speaker 450 may be sound data previously stored in the robot 1. For example, the pre-stored sound data may be voice data of the robot 1. For example, the pre-stored sound data may be a notification sound that guides a state of the robot 1. Meanwhile, the source of the sound transmitted by the speaker 450 may be sound data received through the communication unit 710.

Meanwhile, in the case of a conventional robot, similar to human arms, a pair of arms are provided on both sides of a body to move objects or perform a specific task.

However, when a pair of arms are provided as described above, each of the arms may move separately, and accordingly, loads applied to both sides of the robot may vary. Therefore, a problem that the robot tilts to one side and falls over may occur.

In addition, in a state where the robot falls over, the arms may attempt an operation of standing up by touching the ground, but since the arms on both sides separately rotate to touch the ground, there is a limitation in that the balance is collapsed in a process in which the robot stands up and falls over again.

Meanwhile, in the case of a robot that transports an object or performs a specific task through a single arm, a load of the transported object or an impact that may occur during the task is concentrated on only one arm, which may cause damage to the arm.

To solve this, the robot 1 according to the embodiment of the present disclosure is configured in a shape in which a single arm 400 is rotatably coupled to both sides of the robot body 100.

The connection portion 420 may connect the pair of rotational coupling portions 410 to each other. The connection portion 420 may connect the pair of rotational coupling portions 410 covering both sides in the left-right direction of the robot body 100 so as to rotate together.

The connection portion 420 connects the pair of rotational coupling portions 410 to each other, and may be formed in a shape rotatable about the robot body 100. Specifically, the connection portion 420 may be formed in a frame shape in which both end portions in the longitudinal direction are bent and extended. At this time, both end portions of the connection portion 420 bent and extended may be arranged parallel to each other to be connected to the pair of rotational coupling portions 410. As an example, the connection portion 420 may be formed in a "∩" shape. As another example, it is also possible that the connection portion 420 is formed in an arch shape.

Describing a state in which the arm 400 is coupled to the robot body 100, assuming that the robot body 100 is a human face, the connection portion 420 may be in a shape similar to a headband of headphones. That is, assuming that the robot body 100 is a human face, the arm 400 may look similar to headphones.

With this configuration, the pair of rotational coupling portions 410 are integrally connected to the connection portion 420, so that the entire arm 400 can rotate together by using the rotational coupling portion 410 as a rotation center.

Meanwhile, a rotation radius of the arm 400 may be longer than a maximum length of the first link and shorter than a maximum length of the leg unit 200. Specifically, a shortest distance from the rotation center of the rotational coupling portion 410 to an outer end portion of the connection portion 420 may be longer than the maximum length of the first link and shorter than the maximum length of the leg unit 200.

With this configuration, when the arm 400 is rotated, at least a portion of the arm 400 can be disposed closer to the ground than the first link is.

When a special command of the user or a preset situation does not occur, the outer end portion of the arm 400 may be disposed farther from the ground than the robot body 100 is. With this configuration, the user can grip the arm 400 to easily transport the robot 1. That is, the arm 400 can perform a function of a handle that can be gripped by the user.

In addition, when a special command of the user or a preset situation does not occur, the arm 400 may be disposed behind the robot mask 500. This is to prevent the robot mask 500 from being covered by the arm 400 when the user looks at the robot 1.

Meanwhile, when a special command of the user or a preset situation occurs, the arm 400 may implement various functions while rotating.

As an example, the robot 1 may implement a scooch down state. To this end, the robot 1 may rotate the arm 400 from an upper side of the robot body 100, past a rear side, to a rear lower side of the robot body 100. Along with this or prior to rotation of the arm 400, the leg unit 200 may be moved to lower a posture of the robot 1. Therefore, even when operation of the wheel motor MW is stopped and the wheel 310 does not rotate, the robot 1 tilts backward, so that the pair of wheels 310 and a lower end portion of the arm 400 may come into contact with the ground. As a result, through the operation of the robot 1 as described above, a single arm 400 and a pair of wheels 310 may come into contact with the ground, and the robot body 100 can be supported at three points. Through this, a waiting posture for reducing power consumption can be taken.

As another example, the robot 1 may stand up by touching the ground through the arm 400 in a fallen state. To this end, the robot 1 may rotate the arm 400 toward a front of the robot body 100, and along with this, the wheel 310 may be rotated in a direction in which the robot 1 moves forward. That is, the pair of wheels 310 may be rotated in a direction in which a distance from the arm 400 decreases. As a result, according to the robot 1 of the present disclosure, since a single arm can stand up by touching the ground, the robot 1 can be prevented from shaking or falling over again in a process of standing up, and power consumed in a process of implementing a standing-up operation can be minimized.

Meanwhile, according to an embodiment, the arm 400 of the robot 1 may further include a detachable portion 430 to be coupled to the functional module 900.

The detachable portion 430 may be disposed on the connection portion 420. Specifically, the detachable portion 430 may be disposed on an outer surface of the connection portion 420. Here, the outer surface of the connection portion 420 may refer to a surface disposed in a direction opposite to a direction facing the robot body 100 from the connection portion 420.

With this configuration, the detachable portion 430 may be exposed to an outer side about the robot body 100 so as to easily come into contact with an object approaching from an outside of the robot 1.

The detachable portion 430 may be detachably coupled to the functional module 900. Specifically, the detachable portion 430 may be selectively coupled to or separated from the functional module 900.

The detachable portion 430 is configured in an electromagnet form, and may selectively apply a magnetic force (attractive force) to the functional module 900 according to supply of power.

For example, the detachable portion 430 may be configured in the electromagnet form. With this configuration, the detachable portion 430 can form a uniform magnetic field over a wide area and be stably coupled to the functional module 900.

### Robot mask

As shown in FIG. 7, a robot 1 according to an embodiment of the present disclosure may further include a robot mask 500.

The robot mask 500 may be detachably coupled to the robot body 100 and cover the display 120. The robot mask 500 may be coupled to the robot body 100 to constitute an exterior of the robot 1.

The robot mask 500 includes a mask body 510 and a window 550.

The mask body 510 constitutes an exterior of the robot mask 500. For example, based on a state in which the robot mask 500 and the robot body 100 are coupled to each other, an outer surface of the mask body 510 exposed to the outside may be formed in a curved shape having a predetermined curvature.

In addition, an inner surface of the mask body 510 facing the robot body 100 may be formed in a shape corresponding to a shape of the robot body 100. For example, the inner surface of the mask body 510 may be formed in a flat shape corresponding to a shape of the display 120, and a side wall may protrude from an outer edge thereof so as to accommodate a portion of the body housing 110. Accordingly, the inner surface of the mask body 510 may be formed in a shape of an elliptical flat surface and a side wall surrounding the same.

Although not shown, a magnet for coupling may be disposed on the mask body 510.

For example, at least one magnet may be disposed on a side wall protruding from the inner surface of the mask body 510.

In addition, the magnet may generate a magnetic force (attractive force) to be detachably coupled to the robot body 100. With this configuration, the magnet can couple the body housing 110 and the mask body 510 through the magnetic force, and when a user applies an external force of a predetermined magnitude or more, the body housing 110 and the mask body 510 can be separated.

Although not shown, a mask communication unit may be disposed on the mask body 510 to communicate with the communication unit 710 provided in the robot body 100.

The communication unit of the robot mask 500 may support wireless communication with the robot body 100. A short-range communication module may be provided as a wireless communication module for supporting wireless communication.

The short-range communication may be, for example, NFC (Near Field Communication) communication, or the like.

Information on a shape of the robot mask 500 and a function provided in the robot mask 500 may be transmitted to the robot body 100 through the communication unit of the robot mask 500. In addition, the communication unit of the robot mask 500 may receive a control command of the controller 700 provided in the robot body 100.

Meanwhile, the robot mask 500 may receive power from the robot body 100. Although not shown, the robot mask 500 may be provided with a terminal that can be electrically connected to the robot body 100.

Meanwhile, when coupled to the robot body 100, the robot mask 500 according to an embodiment of the present disclosure may include a window 550 for exposing an image displayed on the display 120 to the outside.

The window 550 may be disposed on the mask body 510. Specifically, the window 550 is disposed to penetrate through the mask body 510, and may be disposed at a location facing the display 120 when the robot mask 500 is coupled to the robot body 100.

The window 550 may be formed of a material through which light can transmit. For example, the window 550 may be formed of a transparent material.

Meanwhile, when the robot mask 500 is coupled to the robot body 100, a face and a facial expression may be displayed on the display 120.

The robot 1 may display a shape of a face such as eyes, a nose, and a mouth on the display 120, thereby allowing a user to feel that the robot expresses emotions.

The robot 1 may display a preset image on the display 120 to depict a facial expression, thereby allowing the user to recognize that the robot expresses emotions.

For example, when the user returns home, the robot 1 may display a smiling face on the display 120 to show joy.

As another example, when the robot 1 detects a cliff and escapes from a danger of falling over, the robot 1 may display a surprised face and a surprised eye expression on the display 120.

As another example, when the user calls the robot 1, the robot 1 may display a wondering facial expression while staring at the user on the display 120. The robot 1 may be set to detect a call and respond when the user calls with a specific pronunciation.

As another example, when the robot 1 cannot understand a user's command, the robot 1 may display a wondering facial expression along with a symbol such as '?' on the display 120.

As another example, when the user continuously commands services to the robot 1, a tired facial expression may be displayed along with a picture representing sweat.

As another example, when the user does not command the robot 1 for a preset time or longer, a sleeping facial expression may be displayed.

In addition to the examples as described above, the robot 1 may express various emotions on the display 120, and expressions that can be displayed may be improved or added through software updates or the like.

In this manner, the robot 1 can provide a pet robot service that displays emotions to the user and communicates with the user, and has an effect of providing emotional stability to the user.

As described above, the robot 1 may visually display emotions by showing facial expressions on the display 120 and may display emotions through voice output of the speaker 450.

For example, a laughing sound, a surprised sound, or the like may be output in response to the expression displayed on the display 120.

In addition, as described above, the robot 1 may visually display emotions by showing facial expressions on the display 120 and may display emotions through rotation of the arm 400.

For example, along with displaying a smiling expression on the display 120, emotions may be displayed by shaking the arm 400.

Meanwhile, a figure displayed in a state in which the robot mask 500 is coupled to the display 120 may be changed according to a shape of the robot mask 500.

Specifically, the controller 700 of the robot 1 may receive information on a shape of the mask 500 through the mask communication unit 530. For example, information on the shape is recorded on each robot mask 500, and the controller 700 may receive the information on the shape of the robot mask 500 from the mask communication unit 530 of the robot mask 500. At this time, graphic user interface (GUI, hereinafter referred to as 'GUI') information according to the shape of each mask 500 is stored in the memory 720. In addition, the controller 700 may control to display a GUI corresponding to the shape of the robot mask 500 on the display 120. Accordingly, in a state in which the robot mask 500 and the robot body 100 are coupled to each other, the display 120 can display the GUI, and the GUI displayed on the display 120 can be viewed from an outside of the robot mask 500 by passing through the window 550.

Meanwhile, the user may directly select a GUI through the input unit 125. In addition, the controller 700 may control to display the GUI input from the user on the display 120.

With this configuration, the user may purchase the robot mask 500 that fits his or her taste, or select a preferred GUI to customize an exterior of the robot 1.

### Functional Module

The robot 1 of the present disclosure includes a functional module 900. The functional module 900 is a component coupled to a lower side of the robot body 100 to provide various functions to the robot 1.

The functional module 900 is detachably coupled to the robot body 100. For example, the functional module 900 may be detachably coupled to a lower portion of the robot body 100. Specifically, the functional module 900 may be coupled to a module coupling portion 150 disposed at the lower portion of the robot body 100.

In particular, in the case of the robot 1 of the present disclosure, which is a two-wheeled robot, since a space in which the functional module 900 is coupled is formed between a pair of wheels 310 and the leg unit 200, there is an advantage in that an overall volume does not significantly increase even in a state in which the robot body 100 and the functional module 900 are coupled to each other.

In addition, through this arrangement, when the functional module 900 is coupled to the robot body 100, not only the pair of wheels 310 but also the functional module 900 may come into contact with the ground B, thereby increasing the number of points at which the ground B and the robot 1 contact and are supported and a supported area. Therefore, according to the functional module 900 of the present disclosure, there is an effect of easily maintaining balance of the robot 1 by being coupled to the robot body 100.

Although not shown, the functional module 900 may be provided with a structure corresponding to the module coupling portion 150 of the robot body 100. For example, the functional module 900 may be provided with a coupling portion 930 detachably coupled to the module coupling portion 150 of the robot body 100. In addition, the functional module 900 may be provided with a corresponding terminal corresponding to a terminal of the robot body 100. The corresponding terminal may come into contact with the terminal of the robot body 100 to receive power from the robot body 100, and may transmit and receive electrical signals to and from the robot body 100.

Although not shown, the functional module 900 may be provided with a lamp. The lamp may indicate a location of the functional module 900 through light emission. For example, the lamp may be an infrared (IR) light emitting diode (LED). With this configuration, the IR sensor 620 disposed on the robot body 100 can detect the location of the functional module 900, and the robot body 100 can travel toward the functional module 900.

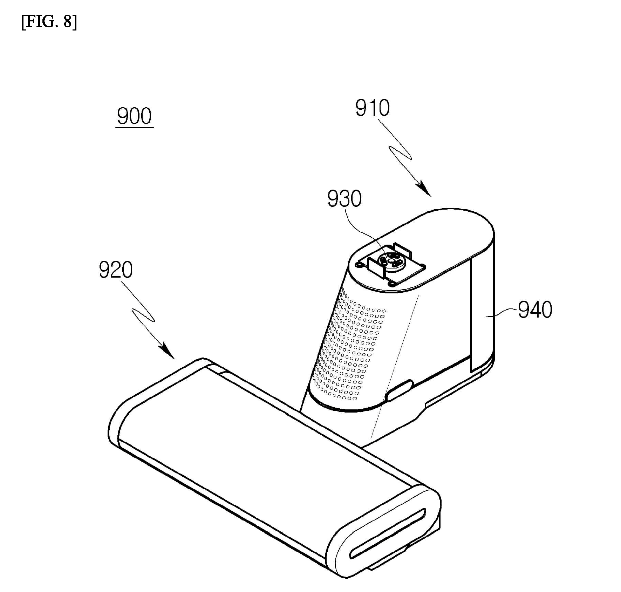

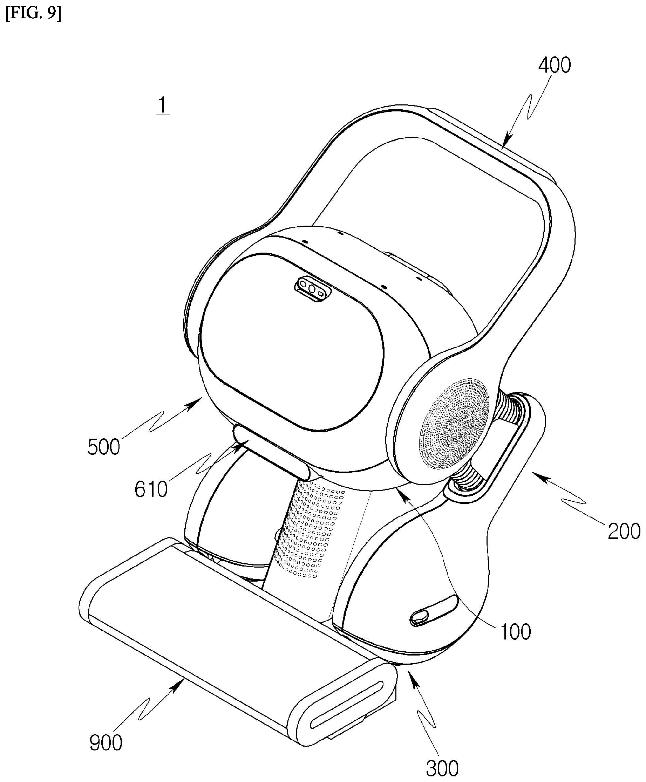

As shown in FIGS. 8 and 9, the functional module 900 may be a cleaning module.

The functional module 900 includes a module body 910, a suction nozzle 920, a coupling portion 930, and a dust bin 940. With this configuration, when the functional module 900 is coupled to the robot body 100, the robot 1 can perform dry cleaning.

The module body 910 may be detachably coupled to the robot body 100 through the coupling portion 930. Although not shown, a flow path through which dust can be sucked may be formed inside the module body 910.

A suction nozzle 920 capable of sucking dust may be provided in front of the module body 910. In addition, a dust bin 940 capable of storing sucked dust may be disposed inside the module body 910. A motor (not shown) that provides a suction force of air may be provided inside the module body 910. At this time, a wheel may be provided on a bottom surface of the module body 910. In addition, the module body 910 may be provided with a battery (not shown) that supplies power to the motor (not shown).

The suction nozzle 920 may suck air and dust while moving along the ground (floor surface). A suction port may be formed on a bottom surface of the suction nozzle 920. In addition, an agitator may be provided around the suction port. In addition, a motor that provides a driving force to the agitator and/or the wheel may be further provided inside the module body 910.

A lateral width of the suction nozzle 920 may be wider than a lateral width of the module body 910. For example, the lateral width of the suction nozzle 920 may be equal to or greater than a maximum distance in the left-right direction of a pair of wheels 310. This is to expand a length of the suction port in the left-right direction. With this configuration, there is an effect of expanding a cleaning area of the functional module 900.

Meanwhile, in the present embodiment, the suction nozzle 920 may be provided with a terminal (not shown) for charging. When the suction nozzle 920 docks with the robot station 2, it may come into contact with the charging terminal 22a to receive power. Power applied through the charging terminal 22a may be supplied to the battery (not shown).

The coupling portion 930 is disposed on an upper portion of the module body 910 and is coupled to the robot body 100. Specifically, the coupling portion 930 may be disposed at a front upper side of the module body 910. The coupling portion 930 may be detachably coupled to the module coupling portion 150 of the module body 910. For example, the coupling portion 930 may include at least a portion made of a metal material or an electromagnet. As another example, the coupling portion 930 may be hook-coupled to the module body 910 including a hook or the like. In this case, a coupling force between the module body 910 and the robot body 100 can be enhanced.

Meanwhile, in the present embodiment, the functional module 900 may be coupled below the robot body 100. The robot body 100 is disposed above the functional module 900 and may move together with the functional module 900. The functional module 900 may change a traveling direction according to movement of the robot body 100. This may look as if the robot body 100 rides on the functional module 900 to perform cleaning when viewed by the user.

Accordingly, the functional module 900 is coupled to the robot body 100 and may be lifted together when the robot body 100 is moved upward.

The dust bin 940 may store dust sucked through the suction nozzle 920. The dust bin 940 may be provided to communicate with a suction port (not shown) formed in the suction nozzle 920.

The dust bin 940 may be provided in the module body 910. For example, the dust bin 940 may be disposed behind the module body 910.

A dust discharge port (not shown) may be formed in the dust bin 940. As an example, the dust discharge port (not shown) may be formed on a lower surface of the dust bin 940 or the suction nozzle 920. As another example, the dust discharge port (not shown) may be formed on a rear outer side surface of the dust bin 940. In addition, the dust discharge port (not shown) may be opened and closed by a dust bin discharge door 941. For example, the dust bin discharge door 941 may be pivotally coupled to the dust bin 940, and an elastic force may be applied by a torsion spring to close the dust discharge port (not shown). At this time, when an external force is applied, the dust bin discharge door 941 may be opened to open an internal space of the dust bin 940.

Dust stored in the dust bin 940 may be collected by the robot station 2. Specifically, when the functional module 900 docks with the robot station 2, an internal space of the dust bin 940 may communicate with the dust collection hole 23a. Accordingly, when the dust collection motor 23b of the robot station 2 is operated, dust inside the dust bin 940 may be collected in the dust bag 23c.

### Robot station

The robot 1 may be coupled to the robot station 2. Specifically, the functional module 900 may dock with the robot station 2.

The robot station 2 may include a station body 21. The station body 21 forms an exterior of the robot station 2, and a dust collection motor 23b and a dust bag 23c may be provided therein.

The station body 21 may be formed with a groove-shaped nozzle coupling portion recessed in a direction parallel to the ground so that a portion of the suction nozzle 920 of the functional module 900 can be coupled thereto. Coupling of the suction nozzle 920 may be guided by the nozzle coupling portion.

Meanwhile, the station body 21 may be provided with a lamp 21a. The lamp 21a may indicate a location of the robot station 2 through light emission. For example, the lamp 21a may be an infrared (IR) light emitting diode (LED). With this configuration, the IR sensor 620 disposed on the robot body 100 can detect the location of the robot station 2, and the robot body 100 can travel toward the robot station 2.

The robot station 2 may include a base plate 22 on which the functional module 900 climbs to be coupled. An inclined portion having a predetermined angle may be formed on the base plate 22 so that the robot body 100 can climb. In addition, a docking portion formed in parallel with the ground and on which the functional module 900 is seated may be formed on the base plate 22.

Meanwhile, a dust collection hole 23a through which dust in the dust bin 940 of the functional module 900 is discharged may be formed in the base plate 22.

Alternatively, according to an embodiment, the dust collection hole may be formed in the station body 21. In this case, a dust discharge port (not shown) formed on a rear side surface of the dust bin 940 and the dust collection hole 23a may communicate with each other. In addition, the base plate 22 may include a charging terminal 22a electrically connected to the functional module 900 to supply power to charge the functional module 900 and/or the robot body 100. When the functional module 900 is coupled, a terminal of the functional module 900 and the charging terminal 22a may be electrically connected, and power is supplied from the robot station 2 to the functional module 900 so that the functional module 900 and/or the robot body 100 can be charged.

Meanwhile, a dust collection flow path communicating with the dust collection hole 23a may be formed in the base plate 22. The dust collection flow path may communicate with an internal space of the dust bag 23c. When the dust collection motor 23b is operated, dust inside the dust bin 940 may flow through the dust collection hole 23a and the dust collection flow path to be collected in the dust bag 23c.

The robot station 2 may include the dust collection motor 23b. The dust collection motor 23b may be disposed inside the station body 21. The dust collection motor 23b may generate a suction force in the dust collection flow path. Through this, a suction force capable of sucking dust is provided inside the dust bin 940.

The robot station 2 may include the dust bag 23c. The dust bag 23c may be disposed inside the station body 21. The dust bag 23c may be disposed vertically above the dust collection motor 23b.

As an example, the dust bag 23c may refer to a dust envelope that collects dust sucked from the inside of the dust bin 940 by the dust collection motor 23b.

The dust bag 23c may be detachably coupled to the station body 21.

Therefore, the dust bag 23c may be separated from the station body 21 to be discarded, and a new dust bag 23c may be coupled to the station body 21.

The dust bag 23c may be provided to receive dust inside while increasing in volume when a suction force is generated by the dust collection motor 23b.

To this end, the dust bag may be made of a material through which air can transmit but foreign substances such as dust cannot transmit.

### Control Configuration

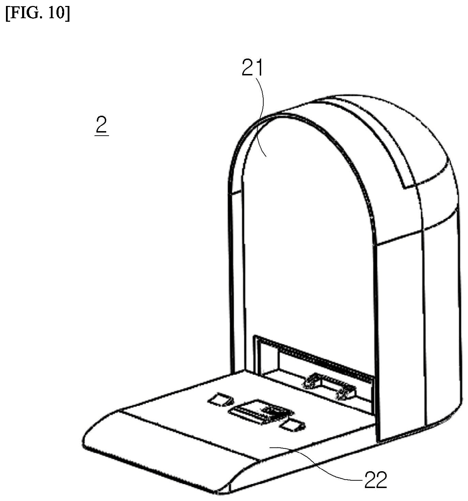

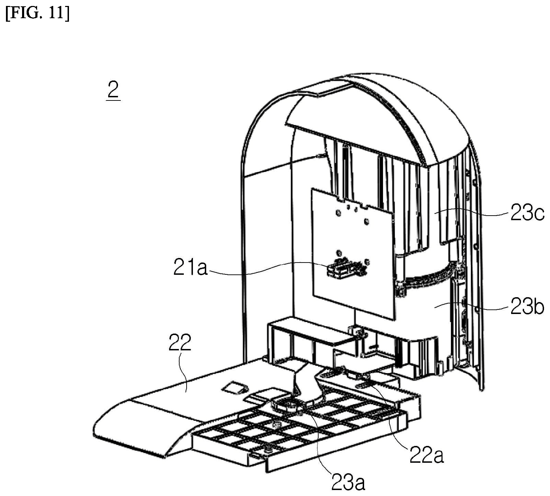

Referring to FIGS. 1 to 12, a robot 1 according to an embodiment of the present disclosure may include a sensor unit 600, a controller 700, a communication unit 710, a memory 720, a battery 800, a motor unit, and an interface unit.

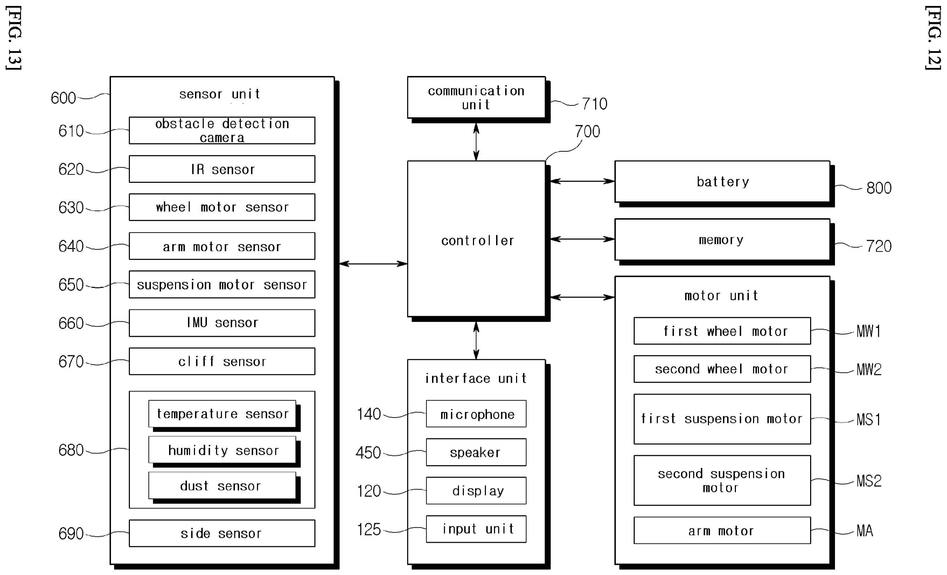

The components shown in the block diagram of FIG. 12 are not essential in implementing the robot 1, so the robot 1 described herein may have more or fewer components than those listed above.

First, the controller 700 may control the overall operation of the robot 1. The controller 700 may control the robot 1 to perform various functions according to setting information stored in the memory 720 to be described later.

The controller 700 may be disposed on the robot body 100. More specifically, the controller 700 may be provided by being mounted on a PCB disposed inside the body housing 110.

The controller 700 may include any kind of device capable of processing data, such as a processor. Here, a 'processor' may refer to a data processing device built into hardware, which has a physically structured circuit to perform a function expressed by code or commands included in a program, for example. As an example of such a data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present disclosure is not limited thereto.

The controller 700 may receive information on an external environment of the robot 1 from at least one of the components of the sensor unit 600 to be described later. In this case, the information on the external environment may be, for example, information such as temperature, humidity, and dust amount of an indoor room in which the robot 1 travels. Alternatively, the information may be, for example, cliff information. Alternatively, the information may be, for example, indoor map information. Of course, the information on the external environment is not limited to the above examples.

The controller 700 may receive information on a current state of the robot 1 from at least one of the components of the sensor unit 600 to be described later. In this case, the current state may be, for example, tilt information of the robot body 100. Alternatively, the information may be, for example, information on a separation state between the wheel 310 and the ground. Alternatively, the information may be, for example, position information of the wheel motor MW. Alternatively, the information may be, for example, position information of the suspension motor MS. Of course, the information on the current state of the robot 1 is not limited to the above examples.

The controller 700 may transmit a driving control command to at least one of the components of the motor unit to be described later. For example, rotation of the wheel motor MW may be controlled for traveling of the robot 1. Alternatively, for example, rotation of the wheel motor MW may be controlled to maintain a horizontal posture of the robot 1. Alternatively, for example, rotation of the suspension motor MS may be controlled to maintain a horizontal posture of the robot 1.

The controller 700 may receive a user's command through at least one of the components of the interface unit to be described later. For example, the command may be a command for turning on/off the robot 1. Alternatively, for example, the command may be a command for manually controlling various functions of the robot 1.

The controller 700 may output information related to the robot 1 through at least one of the components of the interface unit to be described later. For example, the output information may be visual information. Alternatively, for example, the output information may be auditory information.

The motor unit includes at least one motor and may provide a driving force to a component connected to each motor.

The motor unit may include a wheel motor MW that provides a driving force to the left and right wheels 310. More specifically, the motor unit may include a first wheel motor MW1 that transmits a driving force to the wheel 310 disposed on one side in the left-right direction and a second wheel motor MW2 that transmits a driving force to the wheel 310 disposed on the other side in the left-right direction.

The wheel motors MW may be disposed in the wheel units 300, respectively. More specifically, the wheel motor MW may be accommodated inside the lower leg 230. Alternatively, the wheel motor MW may be accommodated inside the wheel 310.

The wheel motor MW is connected to the wheel 310. More specifically, a shaft or a final output stage of a gear of the first wheel motor MW1 is connected to the wheel 310 disposed on one side in the left-right direction. A shaft or a final output stage of a gear of the second wheel motor MW2 is connected to the wheel 310 disposed on the other side in the left-right direction. Each of the left and right wheel motors MW is driven and rotated in accordance with a control command of the controller 700, and the robot 1 travels along the ground due to the rotation of the wheel 310 according to the rotation of the wheel motor MW.

The motor unit may include a suspension motor MS that provides a driving force to the left and right leg units 200. More specifically, the motor unit may include a first suspension motor MS1 that transmits a driving force to the leg unit 200 disposed on one side in the left-right direction and a second suspension motor MS2 that transmits a driving force to the leg unit 200 disposed on the other side in the left-right direction.

The suspension motor MS may be disposed on the robot body 100. More specifically, the suspension motors MS may be accommodated inside the body housing 110, respectively.

The suspension motor MS is connected to the first link. More specifically, a shaft or a final output stage of a gear of the first suspension motor MS1 is connected to the first link disposed on one side in the left-right direction. A shaft or a final output stage of a gear of the second suspension motor MS2 is connected to the first link disposed on the other side in the left-right direction. Each of the left and right suspension motors MS is driven and rotated in accordance with a control command of the controller 700, and as the first link rotates in accordance with rotation of the suspension motor MS and the lower leg 230 connected to the first link rotates, as a result, an angle between the first link and the lower leg 230 may be changed.

Through this, the robot 1 can lift or lower the wheel 310, and can maintain a horizontal posture when climbing an obstacle or traveling on a curved ground. Alternatively, an operation in which the robot body 100 descends or ascends becomes possible.

The motor unit may include an arm motor MA that provides a rotational force to the arm 400.

The arm motor MA may be disposed on the robot body 100. More specifically, at least one arm motor MA may be accommodated inside the body housing 110.

The arm motor MA is driven and rotated in accordance with a control command of the controller 700, and as the rotational coupling portion 410 rotates in accordance with rotation of the arm motor MA and the connection portion 420 formed integrally with the rotational coupling portion 410 rotates, as a result, the arm 400 may be pivotally moved with respect to the robot body 100.

Through this, the robot 1 can rotate the arm 400, and can rotate the arm 400 to be coupled to the functional module 900. Alternatively, the arm 400 can touch the ground through rotation of the arm 400.

The sensor unit 600 includes at least one sensor, and each sensor may measure or detect information on an external environment of the robot 1 and/or information on a current state of the robot 1.

The sensor unit 600 may include an obstacle detection camera 610.

The obstacle detection camera 610 is provided to detect an obstacle T existing in an indoor room where the robot 1 travels and map an indoor structure.

To this end, the obstacle detection camera 610 may be disposed in front of the robot body 100. More specifically, the obstacle detection camera 610 may be disposed in front of the body housing 110.

Meanwhile, in the present embodiment, a plurality of obstacle detection cameras 610 may be disposed. For example, a first detection camera 611 may be disposed at a front lower portion of the body housing 110, and a second detection camera 612 may be disposed at a front upper portion of the body housing 110. With this configuration, the obstacle detection camera 610 can detect an object or a person disposed in front of the robot 1.

The obstacle detection camera 610 may detect the obstacle T and detect a distance to the obstacle T. For example, the first detection camera 611 may be a depth camera.

The obstacle detection camera 610 may photograph the indoor room during traveling to perform SLAM (Simultaneous Localization and Mapping). For example, the second detection camera 612 may be an RGB camera.

The depth camera and the RGB camera may calculate a distance by calculating a time for irradiated light to be reflected and returned after irradiating the light.

The controller 700 may detect the obstacle T and implement SLAM based on the information on the surrounding environment photographed by the obstacle detection camera 610 and information on the current position of the robot 1.

Meanwhile, the method in which the robot 1 according to the embodiment of the present disclosure implements SLAM may be a method implemented by only the obstacle detection camera 610, but is not limited thereto. For example, the robot 1 may implement SLAM by further utilizing an additionally provided sensor. The additional sensor may be, for example, an LDS (Laser Distance Sensor).

The sensor unit 600 may include an IR sensor 620 for detecting infrared rays.

The IR sensor 620 may be an IR camera that detects infrared light.

The IR sensor 620 may be disposed on the robot body 100. In the embodiment of the present disclosure, a plurality of IR sensors 620 may be arranged. For example, a first IR sensor 621 may be disposed at the front lower portion of the body housing 110, and a second IR sensor 622 may be disposed behind the body housing 110. With this configuration, locations of light sources arranged in various directions can be detected.

The IR sensor 620 may be disposed close to the obstacle detection camera 610. For example, the first IR sensor 621 may be disposed immediately below the first obstacle detection camera 611.

With this arrangement, the IR sensor 620 can detect light irradiated by a lamp of the functional module 900 or a robot station (not shown), and when the robot body 100 approaches the lamp, the obstacle detection camera 610 can detect the shape of the functional module 900 or the robot station (not shown).

The IR sensor 620 may approach the module by detecting infrared light emitted by an IR LED provided in a specific module. For example, the module may be a charging station for charging the robot 1. For example, the module may be a functional module 900 detachably provided on the robot body 100.

The controller 700 may control the IR sensor 620 to start detecting the IR LED when a charging state of the robot 1 is equal to or less than a preset level. The controller 700 may control the IR sensor 620 to start detecting the IR LED when a command to find a specific module is received from the user.

The sensor unit 600 may include a wheel motor sensor 630.

The wheel motor sensor 630 may measure a position of the wheel motor MW. For example, the wheel motor sensor 630 may be an encoder. As is well known, the encoder may detect the position of the motor and may also detect a rotation speed of the motor.

The wheel motor sensors 630 may be disposed on the left and right wheel motors MW, respectively. More specifically, the wheel motor sensor 630 may be connected to a shaft or a final output stage of a gear of the wheel motor MW and accommodated inside the lower leg 230 together with the wheel motor MW.

The sensor unit 600 may include an arm motor sensor 640.

The arm motor sensor 640 may measure a position of the arm 400. For example, the arm motor sensor 640 may be a photo sensor. As is well known, the photo sensor may measure a rotation degree of the arm motor MA or a rotation degree of the arm 400.

The arm motor sensor 640 may be disposed close to the arm motor MA. More specifically, the arm motor sensor 640 may be accommodated inside the body housing 110 or the rotational coupling portion 410 together with the arm motor MA.

The suspension motor sensor 650 may measure a position of the leg unit 200. For example, the suspension motor sensor 650 may be a photo sensor. As is well known, the photo sensor may measure a rotation degree of the suspension motor MS or a rotation degree of the upper leg 210.

The suspension motor sensor 650 may be disposed close to the suspension motor MS. More specifically, the suspension motor sensor 650 may be accommodated inside the body housing 110 together with the suspension motor MS.

The sensor unit 600 may include an IMU sensor 660.

The IMU sensor 660 may measure a tilt angle of the robot body 100.

As is well known, the IMU (Inertial Measurement Unit) sensor 660 is a sensor integrating a three-axis acceleration sensor, a three-axis gyro sensor, and a geomagnetic sensor, and is also referred to as an inertial measurement sensor.

The three-axis acceleration sensor is a sensor that detects a gravitational acceleration of an object in a stationary state. Since the gravitational acceleration varies according to an angle at which the object is tilted, a tilt angle is obtained by measuring the gravitational acceleration. However, there is a disadvantage in that a correct value cannot be obtained in a moving acceleration state rather than a stationary state.

The three-axis gyro sensor is a sensor that measures an angular velocity. When the angular velocity is integrated over the entire time, a tilt angle is obtained. However, a continuous error occurs in the angular velocity measured by the gyro sensor due to noise or the like, and due to such an error, an error in an integrated value is accumulated and generated over time.

As a result, when a long time elapses in a stationary waiting state, a tilt of the robot 1 can be accurately measured by the acceleration sensor, but an error occurs due to the gyro sensor. In a case of traveling, an accurate tilt value of the robot 1 can be measured by the gyro sensor, but a correct value cannot be obtained by the acceleration sensor.

The use of the IMU sensor 660 can compensate for the disadvantages of the above-described acceleration sensor and gyro sensor.

An embodiment in which the IMU sensor 660 is provided will be described below in this specification.

The IMU sensor 660 may be disposed on the robot body 100. More specifically, the IMU sensor 660 may be disposed adjacent to the controller 700. The IMU sensor 660 may be provided by being mounted on a PCB inside the robot body 100. To improve measurement accuracy of a tilt angle and direction, it is preferable that the IMU sensor 660 is disposed close to a central region of the robot body 100.

The IMU sensor 660 may measure at least one of three-axis acceleration, three-axis angular velocity, and three-axis geomagnetic data of the robot body 100 and transmit the same to the controller 700.

The controller 700 may calculate a tilted direction and a tilted angle of the robot body 100 using at least one of acceleration, angular velocity, and geomagnetic data received from the IMU sensor 660. Based on this, the controller 700 may perform horizontal posture maintenance control of the robot body 100 to be described later.

The sensor unit 600 may include a cliff sensor 670 for detecting a cliff.

The cliff sensor 670 may be configured to detect a distance to a front ground along which the robot 1 travels. The cliff sensor 670 may be configured in various ways within a range capable of detecting a relative distance between a point where the cliff sensor 670 is formed and the ground.

For example, the cliff sensor 670 may include a light emitting unit that irradiates light and a light receiving unit into which reflected light is incident. The cliff sensor 670 may be formed of an infrared sensor.

The cliff sensor 670 may be disposed on the lower leg 230. For example, a first cliff sensor 671 may be disposed at a front lower end of the lower leg 230, and a second cliff sensor 672 may be disposed at a rear upper side of the lower leg 230. With this configuration, distances between the lower leg 230 and the wheel 310 and the ground B can be measured. In addition, it is also possible to calculate an angle between the lower leg 230 and the ground through a distance difference between the first cliff sensor 671 and the second cliff sensor 672.

The cliff sensor 670 may irradiate light toward a front ground (floor surface) of the robot 1. The cliff sensor 670 allows detecting in advance whether a cliff exists in front of the robot 1 in a traveling direction.

The light emitting unit of the cliff sensor 670 may irradiate light obliquely toward the front ground (floor surface). The light receiving unit of the cliff sensor 670 may receive light reflected and incident from the ground (floor surface). A distance between the front ground and the cliff sensor 670 may be measured based on a difference between an irradiation time point and a reception time point of light.

When the distance measured by the cliff sensor 670 exceeds a preset predetermined value, or when it exceeds a predetermined range, it may be a case where the front ground is suddenly lowered. A cliff can be detected through this principle.

When a cliff is detected in front, the controller 700 may control the wheel motor MW so that the robot 1 travels while avoiding the detected cliff. At this time, control of the wheel motor MW may be stop control. Alternatively, control of the wheel motor MW may be rotation direction switching control.

The sensor unit 600 may include an environmental sensor 680.

The environmental sensor 680 may be configured to measure various environmental states outside the robot 1, that is, inside a house where the robot 1 travels. The environmental sensor 680 may include at least one of a temperature sensor, a humidity sensor, and a dust sensor.

For example, the environmental sensor 680 may be disposed on the arm 400. More specifically, the environmental sensor 680 may be disposed on the connection portion 420. As a possible embodiment, information measured by the environmental sensor 680 may be visually displayed on the display 120.

The sensor unit 600 may include a side sensor 690.

The side sensor 690 may measure a distance to an obstacle including a wall.

The side sensor 690 may be configured to detect a distance to a side wall surface along which the robot 1 travels. The side sensor 690 may be configured in various ways within a range capable of detecting a relative distance between a point where the side sensor 690 is disposed and the obstacle.

For example, the side sensor 690 may include a light emitting unit that irradiates light and a light receiving unit into which reflected light is incident. The side sensor 690 may be formed of an infrared sensor.

The side sensors 690 may be disposed on both side surfaces of the robot 1. For example, the side sensor 690 may be disposed on an outer surface of the lower leg 230 of the leg unit 200.

The interface unit includes at least one component for interaction between the user and the robot 1, and each component may be provided to input a command from the user and/or output information to the user.

The interface unit may include the microphone 140.

The microphone 140 is a component that recognizes a user's voice, and a plurality of microphones 140 may be provided. A plurality of microphones 140 may be disposed on the body housing 110. For example, four microphones 140 may be disposed on an upper side of the body housing 110.

A voice signal received by the microphone 140 may be used to track a position of the user. At this time, a known sound source tracking algorithm may be applied. For example, the sound source tracking algorithm may be a three-point measurement method (triangulation method) using a time difference in which a plurality of microphones 140 receive voice signals. This is a principle in which the position of a voice source is calculated using positions of each microphone 140 and a speed of sound waves.

Meanwhile, when the microphone 140 and the above-described obstacle detection camera 610 cooperate with each other, even when the user calls the robot 1 from a distance, the robot 1 can be implemented to find the user's position.

The interface unit may include the speaker 450.

The speaker 450 may be disposed on the arm 400. For example, the speaker 450 may be disposed on the rotational coupling portion 410 of the arm 400. The speakers 450 may be disposed at locations covering both left and right sides of the body housing 110, respectively.

The speaker 450 may transmit information of the robot 1 as sound. A source of sound transmitted by the speaker 450 may be sound data previously stored in the robot 1. For example, the pre-stored sound data may be voice data of the robot 1. For example, the pre-stored sound data may be a notification sound that guides a state of the robot 1. Meanwhile, the source of the sound transmitted by the speaker 450 may be sound data received through the communication unit 710.

The interface unit may include the display 120 and the input unit 125.

The display 120 may include a display disposed on one or more modules. The display 120 may be disposed in front and upper side of the robot body 100.

The display 120 may be formed of any one device among a light emitting diode (LED), a liquid crystal display (LCD), a plasma display panel, and an organic light emitting diode (OLED).

Information such as operating time information of the robot 1 and power information of the battery 800 may be displayed on the display 120.

A facial expression of the robot 1 may be displayed on the display 120. Alternatively, eyes of the robot 1 may be displayed on the display 120. A current state of the robot 1 may be personified and expressed as emotions through a shape of a face or a shape of eyes displayed on the display 120. For example, when the user returns home after going out, a smiling facial expression or a smiling eye shape may be displayed on the display 120. Accordingly, there is an effect that the user can feel a sense of interacting with the robot 1.

The input unit 125 may be configured to receive a control command for controlling the robot 1 from the user. For example, the control command may be a command for changing various settings of the robot 1. For example, the settings may be voice volume, display brightness, power saving mode settings, and the like.

The input unit 125 may be disposed on the display 120.

The input unit 125 generates key input data input by the user to control operation of the robot 1. To this end, the input unit 125 may be composed of a key pad, a dome switch, a touch pad (static pressure/electrostatic), and the like. In particular, when the touch pad forms a layered structure with the first display, this may be referred to as a touch screen.

The communication unit 710 may be provided to transmit signals between internal components of the robot 1. The communication unit 710 may support, for example, CAN (Controller Area Network) communication. The signal may be, for example, a control command transmitted from the controller 700 to another component.

The communication unit 710 may support wireless communication with other devices existing outside the robot 1. A short-range communication module or a long-distance communication module may be provided as a wireless communication module for supporting wireless communication.

The short-range communication may be, for example, Bluetooth communication, NFC (Near Field Communication) communication, and the like.

The long-distance communication may be, for example, Wireless LAN (WLAN), DLNA (Digital Living Network Alliance), Wibro (Wireless Broadband), Wimax (World Interoperability for Microwave Access), GSM (Global System for Mobile communication), CDMA (Code Division Multi Access), CDMA2000 (Code Division Multi Access 2000), EV-DO (Enhanced Voice-Data Optimized or Enhanced Voice-Data Only), WCDMA (Wideband CDMA), HSDPA (High Speed Downlink Packet Access), HSUPA (High Speed Uplink Packet Access), IEEE 802.16, Long Term Evolution (LTE), LTEA (Long Term Evolution-Advanced), Wireless Mobile Broadband Service (WMBS), BLE (Bluetooth Low Energy), Zigbee, RF (Radio Frequency), LoRa (Long Range), and the like.

The memory 720 is a component in which various data for driving and operating the robot 1 are stored.

An application program for autonomous driving of the robot 1 and various related data may be stored in the memory 720. Each data sensed by the sensor unit 600 may also be stored in the memory 720, and setting information on various settings selected or input by the user may be stored.

The memory 720 may include magnetic storage media or flash storage media, but the scope of the present disclosure is not limited thereto. Such a memory 720 may include an internal memory and/or an external memory, and may include volatile memory such as DRAM, SRAM, or SDRAM, non-volatile memory such as OTPROM (one time programmable ROM), PROM, EPROM, EEPROM, mask ROM, flash ROM, NAND flash memory, or NOR flash memory, SSD, CF (compact flash) card, SD card, Micro-SD card, Mini-SD card, Xd card, or flash drive such as a memory stick, or a storage device such as an HDD.

The memory 720 may be included in the controller 700 or may be provided as a separate component.

The battery 800 is configured to supply power to other components constituting the robot 1.

The battery 800 may be disposed on the robot body 100. More specifically, the battery 800 may be accommodated inside the body housing 110. Although not shown, the battery 800 may be disposed behind the suspension motor MS.

The battery 800 may be charged by an external power source, and to this end, a charging terminal 130 for charging the battery 800 may be provided on one side of the robot body 100. Like the embodiment of the present disclosure, the charging terminal 130 may be disposed at a lower portion of the robot body 100. Accordingly, the robot 1 can be easily coupled to a charging stand in a manner in which the charging terminal 130 is seated on a corresponding terminal of the charging stand from the upper side by approaching the charging stand and descending.

### Robot Station Docking and Charging Posture Control

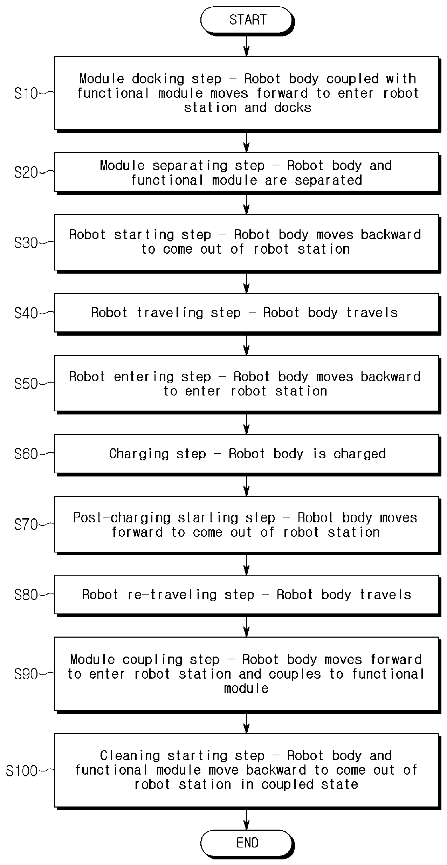

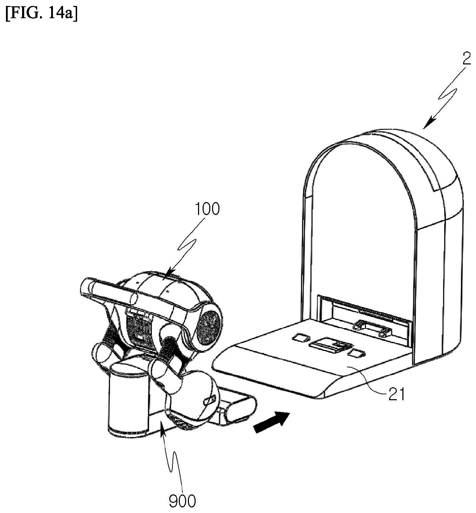

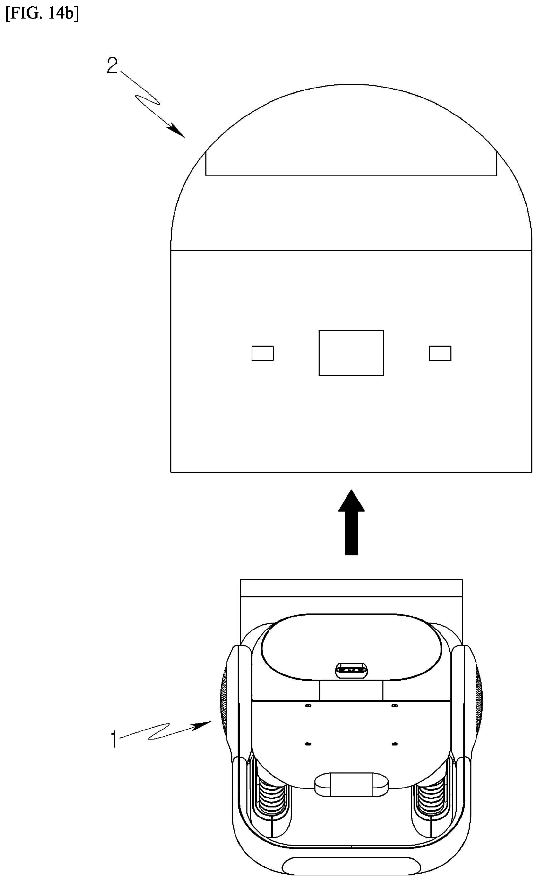

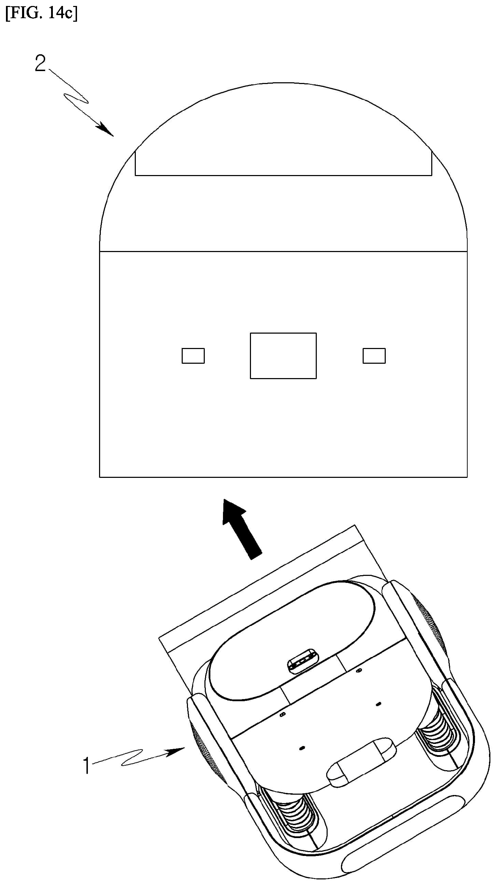

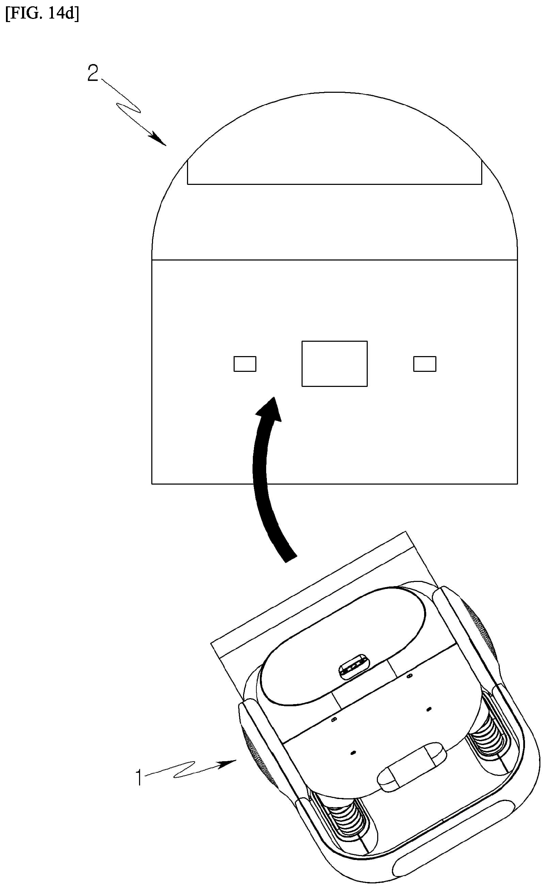

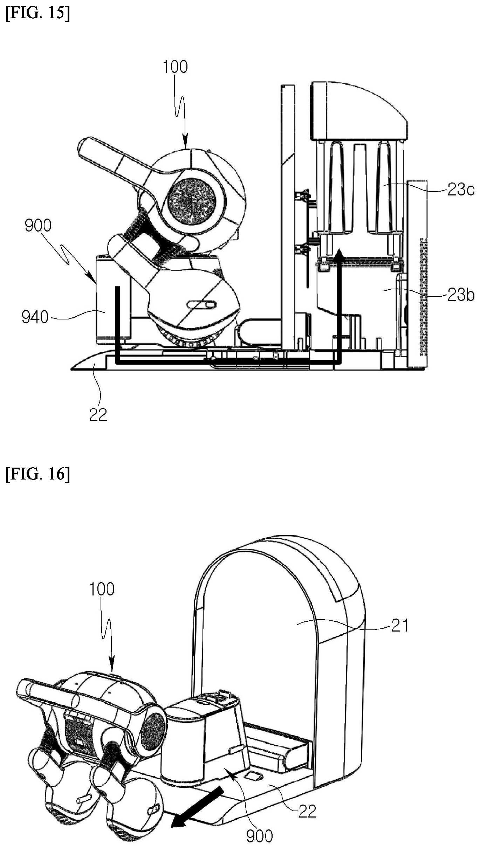

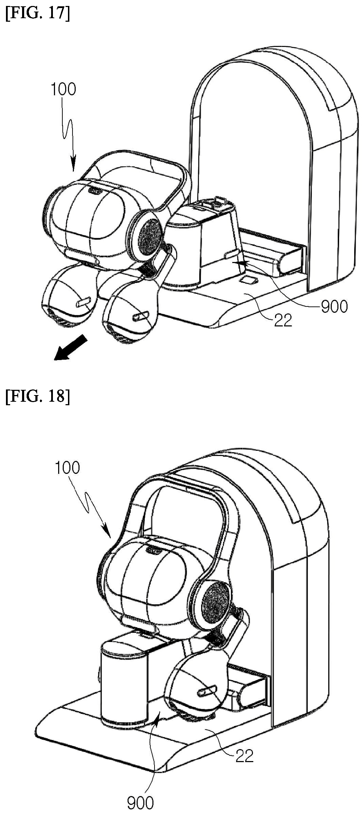

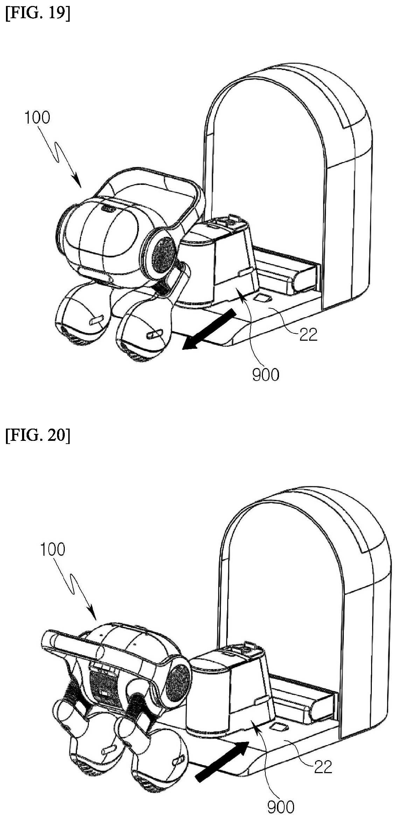

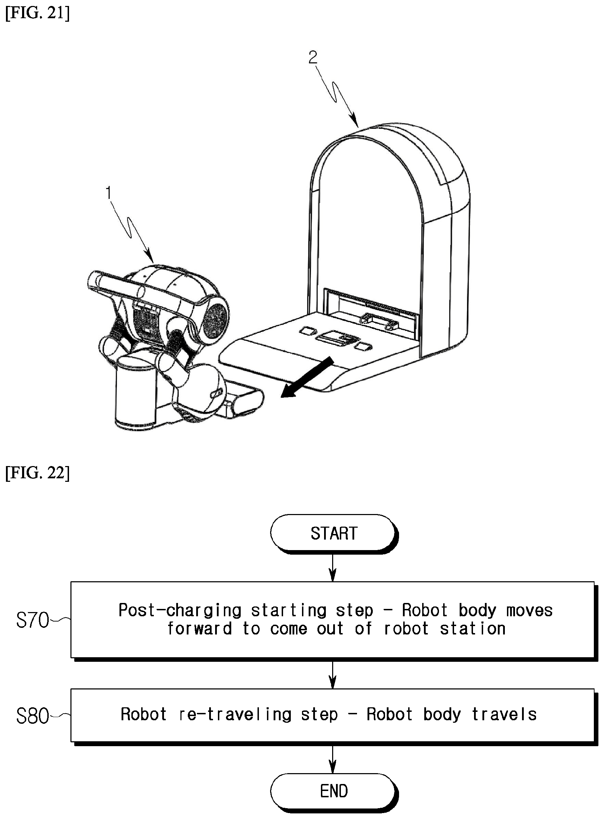

FIG. 13 is a flowchart for describing a method for controlling a robot according to a first embodiment of the present disclosure, FIG. 14 is a view for describing a situation in which a robot body and a functional module are coupled to each other to enter a robot station according to the first embodiment of the present disclosure, FIG. 15 is a view for describing a process in which the robot station collects dust in a dust bin of the functional module according to the first embodiment of the present disclosure, FIG. 16 is a view for describing a situation in which the robot body comes out of the robot station in a state of being separated from the functional module according to the first embodiment of the present disclosure, FIG. 17 is a view for describing a situation in which the robot body travels in a state of being separated from the functional module according to the first embodiment of the present disclosure, FIG. 18 is a view for describing a situation in which the robot body is charged in the robot station according to the first embodiment of the present disclosure, FIG. 19 is a view for describing a situation in which the robot body travels after completing charging according to the first embodiment of the present disclosure, FIG. 20 is a view for describing a situation in which the robot body enters the robot station to be coupled to the functional module according to the first embodiment of the present disclosure, and FIG. 21 is a view for describing a situation in which the robot body comes out of the robot station by being coupled to the functional module according to the first embodiment of the present disclosure.

Referring to FIGS. 12 to 21, a method for controlling a robot according to the first embodiment of the present disclosure will be described as follows.

The method for controlling a robot according to the first embodiment of the present disclosure includes a module docking step (S10), a module separating step (S20), a robot starting step (S30), a robot traveling step (S40), a robot entering step (S50), a charging step (S60), a post-charging starting step (S70), a robot re-traveling step (S80), a module coupling step (S90), and a cleaning starting step (S100).

In the module docking step (S10), the robot body 100 enters the robot station 2 in a state of being coupled to the functional module 900, so that the functional module 900 docks with the robot station 2. Specifically, in the module docking step (S10), the IR sensor 620 may detect a location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the front of the robot body 100 faces the robot station 2. Accordingly, the robot body 100 may face the robot station 2 in a state of being coupled to the functional module 900.

And, the controller 700 may detect an angle formed between the robot station 2 and the robot 1. That is, in the module docking step (S10), the controller 700 may draw a virtual line with respect to a forward traveling direction of the robot 1 to align it with a front surface of the robot station 2 where the lamp 21a is disposed.

Thereafter, the controller 700 may control the wheel motor MW so that the robot body 100 moves forward in a state in which the front surface of the robot body 100 faces the front surface of the robot station 2 (refer to FIGS. 14a and 14b).

Accordingly, the robot body 100 may move forward to dock with the robot station 2. The robot 1 may climb onto the base plate 22 of the robot station 2. In addition, the robot 1 may be docked with the robot station 2.

Specifically, when the robot 1 enters the robot station 2, the functional module 900 may dock with the robot station 2. That is, a terminal of the functional module 900 is electrically connected to a charging terminal 22a of the base plate 22 of the robot station 2, and the dust bin 940 of the functional module 900 may communicate with the dust collection hole 23a.

Through this process, the functional module 900 is charged through the robot station 2, and a state in which dust in the dust bin 940 of the functional module 900 can be collected through the robot station 2 can be achieved.

Meanwhile, referring to FIG. 14c, in the module docking step (S10), the robot 1 may enter in a direction crossing the robot station 2 to dock with the robot station 2.

In the module docking step (S10), the controller 700 may draw a virtual line with respect to the forward traveling direction of the robot 1 to detect an angle with the front surface of the robot station 2 where the lamp 21a is disposed.

Thereafter, the controller 700 may control the wheel motor MW so that the robot body 100 moves forward in a state of forming a predetermined angle with the front surface of the robot station 2. Accordingly, the robot 1 may climb onto the base plate 22 of the robot station 2.

Thereafter, the robot 1 may change a direction at a predetermined angle to align with the front surface of the robot station 2. For example, the controller 700 may control rotation speeds of a pair of wheels 310 to be different from each other to rotate the robot body 100 at a predetermined angle.

Accordingly, the robot body 100 may move forward to dock with the robot station 2.

Meanwhile, referring to FIG. 14d, in the module docking step (S10), the robot 1 may dock with the robot station 2 while drawing a curve having a predetermined curvature.

In the module docking step (S10), the controller 700 may travel in a state in which rotation speeds of a pair of wheels 310 are controlled to be different from each other. Therefore, the robot body 100 may turn while drawing a curve. Accordingly, the robot 1 may climb onto the base plate 22 of the robot station 2.

Thereafter, the controller 700 may move while rotating the robot body 100 so that the terminal of the functional module 900 is electrically connected to the charging terminal 22a of the base plate 22 of the robot station 2. For example, the controller 700 may control rotation speeds of the pair of wheels 310 to be different from each other to rotate the robot body 100 at a predetermined angle.

Accordingly, the robot body 100 may move forward to dock with the robot station 2.

In the module separating step (S20), after the module docking step (S10), the robot body 100 and the functional module 900 may be separated from each other.

Specifically, in the module separating step (S20), the controller 700 may control the suspension motor MS to control an angle between the upper leg 210 and the lower leg 230 to increase. That is, the controller 700 may control the suspension motor MS so that a distance between an upper end portion of the upper leg 210 and a lower end portion of the lower leg 230 increases.

Through this control, the leg unit 200 bent at a predetermined angle is gradually straightened, so that the robot body 100 can be lifted. For example, a height of the robot body 100 from the ground in the module separating step (S20) is higher than that of the robot body 100 in the module docking step (S10).

Therefore, in the module separating step (S20), the robot body 100 may be moved upward so as to be away from the ground. That is, in the module separating step (S20), a length from the base plate 22 to an upper end of the robot body 100 may be increased.

At the same time, coupling between the robot body 100 and the functional module 900 may be released. For example, when the robot body 100 and the functional module 900 are coupled through an electromagnet, the controller 700 may cut off power applied to the electromagnet. As another example, when the robot body 100 and the functional module 900 are coupled through a mechanism such as a hook, the controller 700 may operate an actuator that moves the hook or the like to release the coupling.

Through this, the coupling between the module body 910 and the robot body 100 can be released. Accordingly, the functional module 900 is maintained in a state of being docked with the robot station 2, and the robot body 100 can be in a state capable of traveling.

In the robot starting step (S30), the robot body 100 may come out of the robot station 2 in a state in which the functional module 900 is separated.

In the robot starting step (S30), the controller 700 may control the wheel motor MW so that the robot body 100 moves backward to come out of the robot station 2 in a state in which the functional module 900 is separated.

Specifically, in a state in which the module separating step (S20) is completed, the front surface of the robot station 2 may be arranged to face the front surface of the robot body 100. At this time, a suction nozzle 920 may be disposed in front of the pair of wheels 310. That is, in a state in which the module separating step (S20) is completed, the front of the wheels 310 is blocked by the suction nozzle 920.

Therefore, the robot body 100 needs to move backward to escape from the base plate 22. Therefore, in the robot starting step (S30), the controller 700 may control the wheel motor MW to move the robot body 100 backward, thereby escaping from the base plate 22.

At the same time, the controller 700 may control the suspension motor MS to control the angle between the upper leg 210 and the lower leg 230 to decrease. That is, the controller 700 may control the suspension motor MS so that the distance between the upper end portion of the upper leg 210 and the lower end portion of the lower leg 230 decreases.

Through this, the straightened leg unit 200 may be bent to the original predetermined angle.

After the robot starting step (S30), the robot body 100 travels (S40). At this time, the controller 700 may control the wheel motor MW to rotate the robot body 100 so that the robot body 100 faces a direction in which the robot body 100 is to travel.

Thereafter, the controller 700 may travel the robot body 100 according to a user's command.

**In** the robot entering step (S50), the robot body 100 after traveling may enter the robot station 2 for charging. **In** the robot entering step (S50), the robot body 100 may move backward to enter the robot station 2.

At this time, a direction in which the robot body 100 enters the robot station 2 may be different from a direction in which the robot body 100 and the functional module 900 together enter the robot station 2 in the module docking step (S10).

Specifically, in the robot entering step (S50), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the rear of the robot body 100 faces the robot station 2.

And, the controller 700 may detect an angle formed between the robot station 2 and the robot 1. That is, in the robot entering step (S50), the controller 700 may draw a virtual line with respect to a backward traveling direction of the robot 1 to align it with the front surface of the robot station 2 where the lamp 21a is disposed.

At this time, the controller 700 may control the suspension motor MS to control the angle between the upper leg 210 and the lower leg 230 to increase. Through this control, the leg unit 200 bent at a predetermined angle is gradually straightened, so that the robot body 100 can be lifted.

Accordingly, in the robot entering step (S50), the robot body 100 may be moved upward so as to be away from the ground.

Thereafter, the controller 700 may control the wheel motor MW so that the robot body 100 moves backward in a state in which the rear surface of the robot body 100 faces the front surface of the robot station 2.

Accordingly, the robot body 100 may move backward to move to an upper portion of the functional module 900.

At this time, according to an embodiment, the robot body 100 may detect a location of the functional module 900. As an example, the robot body 100 may detect infrared rays irradiated from an IR lamp (not shown) provided in the functional module 900 through the IR sensor 620. As another example, the robot body 100 may detect the shape of the functional module 900 through the obstacle detection camera 610. Through this, the robot body 100 can be accurately positioned on the upper portion of the functional module 900.

In the charging step (S60), after the robot entering step (S50), the robot body 100 is charged.

After the robot body 100 is positioned on the upper portion of the functional module 900 in the robot entering step (S50), in the charging step (S60), the controller 700 may control the suspension motor MS so that the angle between the upper leg 210 and the lower leg 230 decreases. That is, in the charging step (S60), the controller 700 may control the robot body 100 to descend.

Through this, a charging terminal may be provided on a lower side of the robot body 100, and may come into contact with a terminal disposed on an upper surface of the functional module 900.

Accordingly, the robot body 100 and the functional module 900 may be electrically connected. Therefore, the robot body 100 may receive power from the robot station 2 through the functional module 900.

Therefore, in the charging step (S60), the robot body 100 may be charged together with the functional module 900.

Meanwhile, a direction in which the robot body 100 is placed in the charging step (S60) may be different from a direction in which the robot body 100 is placed in the module docking step (S10). Specifically, the direction in which the robot body 100 is placed in the charging step (S60) may be opposite to the direction in which the robot body 100 is placed in the module docking step (S10). That is, in the module docking step (S10), the front of the robot body 100 is arranged to face the station body 21, and in the charging step (S60), the front of the robot body 100 may be arranged to face a direction opposite to the direction in which the station body 21 is arranged.

The charging step (S60) may be performed until charging is completed or until a user calls the robot body 100.

In the post-charging starting step (S70), the robot body 100 may come out of the robot station 2 in a state in which the functional module 900 is separated.

After the charging step (S60), the controller 700 may control the suspension motor MS to control the angle between the upper leg 210 and the lower leg 230 to increase. That is, when charging is completed, the controller 700 may control the robot body 100 to ascend.

Through this, connection between the charging terminal provided on the lower side of the robot body 100 and the terminal disposed on the upper surface of the functional module 900 may be released.

In the post-charging starting step (S70), the controller 700 may control the wheel motor MW so that the robot body 100 moves forward to come out of the robot station 2 in a state in which the functional module 900 is separated.

Specifically, in a state in which the charging step (S60) is completed, the suction nozzle 920 may be disposed behind the pair of wheels 310. That is, in a state in which the charging step (S60) is completed, the rear of the wheels 310 is blocked by the suction nozzle 920.

Therefore, in the post-charging starting step (S70), the controller 700 may control the wheel motor MW to move the robot body 100 forward, thereby escaping from the base plate 22.

Along with this, the controller 700 may control the suspension motor MS to control the angle between the upper leg 210 and the lower leg 230 to decrease. That is, the controller 700 may control the robot body 100 to descend.

Accordingly, the robot body 100 may return to its original height.

In the post-charging traveling step (S80), after the post-charging starting step (S70), the robot body 100 travels. At this time, the controller 700 may control the wheel motor MW to rotate the robot body 100 so that the robot body 100 faces a direction in which the robot body 100 is to travel.

Thereafter, the controller 700 may travel the robot body 100 according to a user's command.

In the module coupling step (S90), the robot body 100 and the functional module 900 may be coupled to each other.

In the module coupling step (S90), the robot body 100 after traveling may enter the robot station 2 to be coupled to the functional module 900. In the module coupling step (S90), the robot body 100 may move forward to enter the robot station 2.

Specifically, in the module coupling step (S90), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the front of the robot body 100 faces the robot station 2.

And, the controller 700 may detect an angle formed between the robot station 2 and the robot 1. That is, in the module coupling step (S90), the controller 700 may draw a virtual line with respect to the forward traveling direction of the robot 1 to align it with the front surface of the robot station 2 where the lamp 21a is disposed.

At this time, the controller 700 may control the suspension motor MS to control the angle between the upper leg 210 and the lower leg 230 to increase. Through this control, the leg unit 200 bent at a predetermined angle is gradually straightened, so that the robot body 100 can be lifted. Accordingly, in the module coupling step (S90), the robot body 100 may be moved upward so as to be away from the ground.

Thereafter, the controller 700 may control the wheel motor MW so that the robot body 100 moves forward in a state in which the front surface of the robot body 100 faces the front surface of the robot station 2.

Accordingly, the robot body 100 may move forward to move to the upper portion of the functional module 900.

At this time, according to an embodiment, the robot body 100 may detect a location of the functional module 900. As an example, the robot body 100 may detect infrared rays irradiated from an IR lamp (not shown) provided in the functional module 900 through the IR sensor 620. As another example, the robot body 100 may detect the shape of the functional module 900 through the obstacle detection camera 610. Through this, the robot body 100 can be accurately positioned on the upper portion of the functional module 900.

Thereafter, after the robot body 100 is positioned on the upper portion of the functional module 900, in the module coupling step (S90), the controller 700 may control the suspension motor MS so that the angle between the upper leg 210 and the lower leg 230 decreases. That is, in the charging step (S60), the controller 700 may control the robot body 100 to descend.

Through this, the robot body 100 and the coupling portion 930 of the functional module 900 may be coupled to each other.

Meanwhile, in the module coupling step (S90), the robot body 100 may enter in a direction crossing the robot station 2 to dock with the robot station 2, or may dock with the robot station 2 while drawing a curve having a predetermined curvature.

The method for controlling a robot according to the first embodiment of the present disclosure may further include a cleaning starting step (S100) of coming out of the robot station 2 to clean a floor surface in a state in which the robot body 100 and the functional module 900 are coupled to each other.

In the cleaning starting step (S100), the robot body 100 and the functional module 900 may come out of the robot station 2 in a state in which the functional module 900 is coupled.

In the cleaning starting step (S100), the controller 700 may control the wheel motor MW so that the robot body 100 moves backward to come out of the robot station 2 in a state in which the functional module 900 is coupled.

Specifically, in a state in which the module coupling step (S90) is completed, the front surface of the robot station 2 may be arranged to face the front surface of the robot body 100.

Accordingly, the controller 700 may control the wheel motor MW to move the robot body 100 and the functional module 900 backward, thereby escaping from the base plate 22.

Meanwhile, FIG. 22 is a flowchart showing a method for controlling a robot according to a second embodiment of the present disclosure.

The method for controlling a robot according to the second embodiment may be control of the robot 1 when a user calls only the robot body 100 being charged.

To avoid repeated descriptions, the method for controlling a robot according to the first embodiment of the present disclosure may be applied unless otherwise specified.

The method for controlling a robot according to the second embodiment of the present disclosure includes a post-charging starting step (S70) and a post-charging traveling step (S80).

In the post-charging starting step (S70), when a call command of the robot body 100 is received from the user, the controller 700 may come out of the robot station 2 in a state in which the functional module 900 is separated.

At this time, the controller 700 may control the suspension motor MS to control the angle between the upper leg 210 and the lower leg 230 to increase. That is, the controller 700 may control the robot body 100 to ascend.

Through this, the connection between the charging terminal provided on the lower side of the robot body 100 and the terminal disposed on the upper surface of the functional module 900 may be released.

In addition, the wheel motor MW may be controlled so that the robot body 100 moves forward to come out of the robot station 2 in a state in which the functional module 900 is separated.

At this time, the rear of the wheel 310 is blocked by the suction nozzle 920.

Therefore, in the post-charging starting step (S70), the controller 700 may control the wheel motor MW to move the robot body 100 forward, thereby escaping from the base plate 22.

As the robot body 100 escapes from the base plate 22, the controller 700 may control the suspension motor MS to control the angle between the upper leg 210 and the lower leg 230 to decrease. That is, the controller 700 may control the robot body 100 to descend.

Accordingly, the robot body 100 may return to its original height.

In the post-charging traveling step (S80), after the post-charging starting step (S70), the robot body 100 travels. At this time, the controller 700 may control the wheel motor MW to rotate the robot body 100 so that the front of the robot body 100 faces the user.

Thereafter, the controller 700 may travel the robot body 100 according to a user's command.

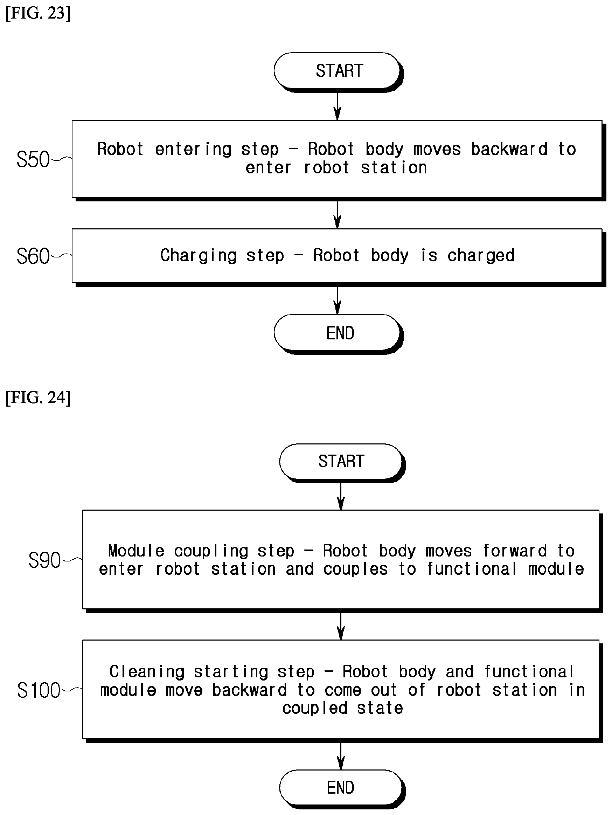

Meanwhile, FIG. 23 is a flowchart showing a method for controlling a robot according to a third embodiment of the present disclosure.

The method for controlling a robot according to the third embodiment may be control of the robot 1 when a user commands charging of the robot body 100 during traveling.

To avoid repeated descriptions, the method for controlling a robot according to the first embodiment of the present disclosure may be applied unless otherwise specified.

The method for controlling a robot according to the third embodiment of the present disclosure includes a robot entering step (S50) and a charging step (S60).

In the robot entering step (S50), when a charging command is received from the user, the robot body 100 may enter the robot station 2 for charging. In the robot entering step (S50), the robot body 100 may move backward to enter the robot station 2.

Specifically, in the robot entering step (S50), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the rear of the robot body 100 faces the robot station 2. That is, in the robot entering step (S50), the robot body 100 that has been traveling forward may rotate so that the robot station 2 is positioned behind the robot body 100.

And, the controller 700 may detect an angle formed between the robot station 2 and the robot 1. That is, in the robot entering step (S50), the controller 700 may draw a virtual line with respect to the backward traveling direction of the robot 1 to align it with the front surface of the robot station 2 where the lamp 21a is disposed.

At this time, the controller 700 may control the suspension motor MS to control the angle between the upper leg 210 and the lower leg 230 to increase. Through this control, the leg unit 200 bent at a predetermined angle is gradually straightened, so that the robot body 100 can be lifted.

Accordingly, in the robot entering step (S50), the robot body 100 may move upward so as to be away from the ground.

Thereafter, the controller 700 may control the wheel motor MW so that the robot body 100 moves backward in a state in which the rear surface of the robot body 100 faces the front surface of the robot station 2.

Accordingly, the robot body 100 may move backward to move to the upper portion of the functional module 900.

At this time, according to an embodiment, the robot body 100 may detect the location of the functional module 900. As an example, the robot body 100 may detect infrared rays irradiated from an IR lamp (not shown) provided in the functional module 900 through the IR sensor 620. As another example, the robot body 100 may detect the shape of the functional module 900 through the obstacle detection camera 610. Through this, the robot body 100 can be accurately positioned on the upper portion of the functional module 900.

In the charging step (S60), after the robot entering step (S50), the robot body 100 is charged.

After the robot body 100 is positioned on the upper portion of the functional module 900 in the robot entering step (S50), in the charging step (S60), the controller 700 may control the suspension motor MS so that the angle between the upper leg 210 and the lower leg 230 decreases. That is, in the charging step (S60), the controller 700 may control the robot body 100 to descend.

Through this, a charging terminal may be provided on the lower side of the robot body 100, and may come into contact with a terminal disposed on the upper surface of the functional module 900.

Accordingly, the robot body 100 and the functional module 900 may be electrically connected. Therefore, the robot body 100 may receive power from the robot station 2 through the functional module 900.

Therefore, in the charging step (S60), the robot body 100 may be charged together with the functional module 900.

Meanwhile, FIG. 24 is a flowchart showing a method for controlling a robot according to a fourth embodiment of the present disclosure.

The method for controlling a robot according to the fourth embodiment may be control of the robot 1 when a user commands cleaning of the robot body 100 during traveling.

To avoid repeated descriptions, the method for controlling a robot according to the first embodiment of the present disclosure may be applied unless otherwise specified.

The method for controlling a robot according to the fourth embodiment of the present disclosure includes a module coupling step (S90) and a cleaning starting step (S100).

In the module coupling step (S90), when a cleaning command is received from the user, the robot body 100 and the functional module 900 may be coupled to each other.

In the module coupling step (S90), when a cleaning command is received from the user, the controller 700 may enter the robot station 2 for coupling the robot body 100 with the functional module 900. In the module coupling step (S90), the robot body 100 may move forward to enter the robot station 2.

Specifically, in the module coupling step (S90), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the front of the robot body 100 faces the robot station 2.

And, the controller 700 may detect an angle formed between the robot station 2 and the robot 1. That is, in the module coupling step (S90), the controller 700 may draw a virtual line with respect to the forward traveling direction of the robot 1 to align it with the front surface of the robot station 2 where the lamp 21a is disposed.

At this time, the controller 700 may control the suspension motor MS to control the angle between the upper leg 210 and the lower leg 230 to increase. Through this control, the leg unit 200 bent at a predetermined angle is gradually straightened, so that the robot body 100 can be lifted.

Accordingly, in the module coupling step (S90), the robot body 100 may move upward so as to be away from the ground.

Thereafter, the controller 700 may control the wheel motor MW so that the robot body 100 moves forward in a state in which the front surface of the robot body 100 faces the front surface of the robot station 2.

Accordingly, the robot body 100 may move forward to move to the upper portion of the functional module 900.

At this time, according to an embodiment, the robot body 100 may detect the location of the functional module 900. As an example, the robot body 100 may detect infrared rays irradiated from an IR lamp (not shown) provided in the functional module 900 through the IR sensor 620. As another example, the robot body 100 may detect the shape of the functional module 900 through the obstacle detection camera 610. Through this, the robot body 100 can be accurately positioned on the upper portion of the functional module 900.

Thereafter, after the robot body 100 is positioned on the upper portion of the functional module 900, in the module coupling step (S90), the controller 700 may control the suspension motor MS so that the angle between the upper leg 210 and the lower leg 230 decreases. That is, in the charging step (S60), the controller 700 may control the robot body 100 to descend.

Through this, the robot body 100 and the coupling portion 930 of the functional module 900 may be coupled to each other.

In the cleaning starting step (S100), the robot body 100 and the functional module 900 may come out of the robot station 2 in a state in which the functional module 900 is coupled.

In the cleaning starting step (S100), the controller 700 may control the wheel motor MW so that the robot body 100 moves backward to come out of the robot station 2 in a state in which the functional module 900 is coupled.

Specifically, in a state in which the module coupling step (S90) is completed, the front surface of the robot station 2 may be arranged to face the front surface of the robot body 100.

Accordingly, the controller 700 may control the wheel motor MW to move the robot body 100 and the functional module 900 backward, thereby escaping from the base plate 22.

Thereafter, the robot 1 may perform cleaning while traveling on a surface to be cleaned.

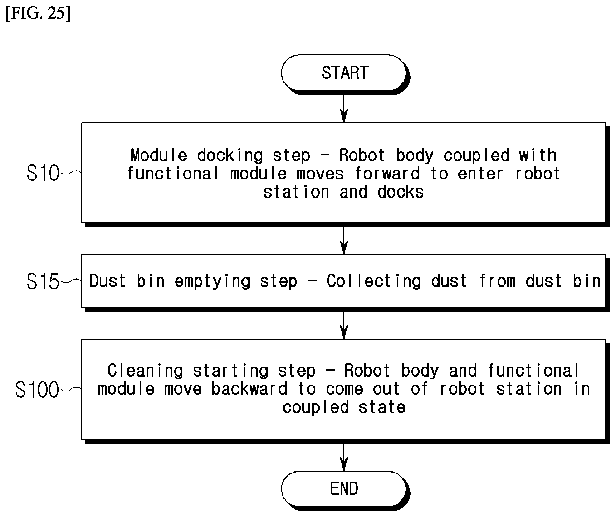

Meanwhile, FIG. 25 is a flowchart showing a method for controlling a robot according to a fifth embodiment of the present disclosure.

The method for controlling a robot according to the fifth embodiment may be control of the robot 1 when a user commands to empty the dust bin 940 of the robot body 100 that is traveling by being coupled with the functional module 900.

To avoid repeated descriptions, the method for controlling a robot according to the first embodiment of the present disclosure may be applied unless otherwise specified.

The method for controlling a robot according to the fifth embodiment of the present disclosure includes a module docking step (S10), a dust bin emptying step (S15), and a cleaning starting step (S100).

In the module docking step (S10), when a dust bin 940 emptying command is received from the user, the functional module 900 enters the robot station 2 to dock with the robot station 2 in a state in which the robot body 100 and the functional module 900 are coupled to each other. Specifically, in the module docking step (S10), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the front of the robot body 100 faces the robot station 2. Accordingly, the robot body 100 may face the robot station 2 in a state of being coupled to the functional module 900.

And, the controller 700 may detect an angle formed between the robot station 2 and the robot 1. That is, in the module docking step (S10), the controller 700 may draw a virtual line with respect to the forward traveling direction of the robot 1 to align it with the front surface of the robot station 2 where the lamp 21a is disposed.

Thereafter, the controller 700 may control the wheel motor MW so that the robot body 100 moves forward in a state in which the front surface of the robot body 100 faces the front surface of the robot station 2.

Accordingly, the robot body 100 may move forward to dock with the robot station 2.

The robot 1 may climb onto the base plate 22 of the robot station 2. In addition, the robot 1 may be docked with the robot station 2.

Specifically, when the robot 1 enters the robot station 2, the functional module 900 may dock with the robot station 2. That is, the terminal of the functional module 900 is electrically connected to the charging terminal 22a of the base plate 22 of the robot station 2, and the dust bin 940 of the functional module 900 may communicate with the dust collection hole 23a.

In the dust bin emptying step (S15), after the module docking step (S10), the robot station 2 may collect dust from the dust bin 940.

When the functional module 900 is docked with the robot station 2, the controller 700 of the robot 1 may detect that the terminal of the functional module 900 and the charging terminal 22a of the base plate 22 of the robot station 2 are electrically connected.

Thereafter, the controller 700 may operate the dust collection motor 23b of the robot station 2 through the communication unit 710. Accordingly, dust inside the dust bin 940 may be collected.

After the dust inside the dust bin 940 is collected, the controller 700 may perform the cleaning starting step (S100).

Meanwhile, as another example, when the functional module 900 is docked with the robot station 2, the controller of the robot station 2 may detect that the terminal of the functional module 900 and the charging terminal 22a of the base plate 22 of the robot station 2 are electrically connected.

Alternatively, when the functional module 900 is docked with the robot station 2 in the module docking step (S10), the controller of the robot station 2 may detect that the functional module 900 is coupled with the robot station 2 through a contact sensor such as a micro switch.

Thereafter, the controller of the robot station 2 may operate the dust collection motor 23b of the robot station 2. Accordingly, dust inside the dust bin 940 may be collected.

In the cleaning starting step (S100), the robot body 100 and the functional module 900 may come out of the robot station 2 in a state in which the functional module 900 is coupled.

In the cleaning starting step (S100), the controller 700 may control the wheel motor MW so that the robot body 100 moves backward to come out of the robot station 2 in a state in which the functional module 900 is coupled.

Specifically, in a state in which the module coupling step (S90) is completed, the front surface of the robot station 2 may be arranged to face the front surface of the robot body 100.

Accordingly, the controller 700 may control the wheel motor MW to move the robot body 100 and the functional module 900 backward, thereby escaping from the base plate 22.

Thereafter, the robot 1 may perform cleaning while traveling on a surface to be cleaned.

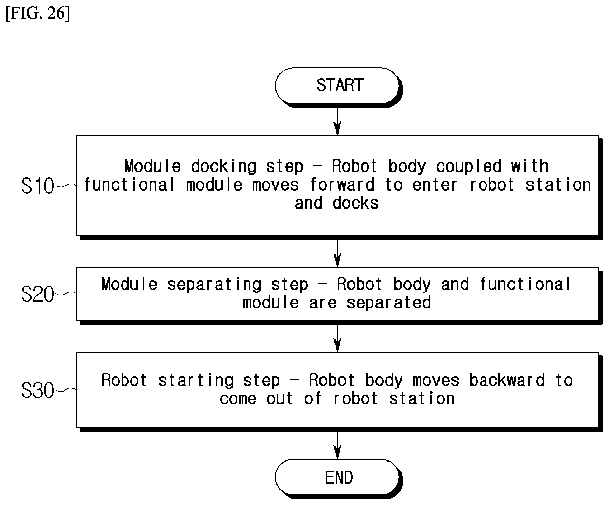

Meanwhile, FIG. 26 is a flowchart showing a method for controlling a robot according to a sixth embodiment of the present disclosure.

The method for controlling a robot according to the sixth embodiment may be control of the robot 1 when a user commands to end cleaning of the robot 1 that is performing cleaning.

To avoid repeated descriptions, the method for controlling a robot according to the first embodiment of the present disclosure may be applied unless otherwise specified.

The method for controlling a robot according to the sixth embodiment of the present disclosure includes a module docking step (S10), a module separating step (S20), and a robot starting step (S30).

In the module docking step (S10), when a command to end cleaning is received, the functional module 900 enters the robot station 2 to dock with the robot station 2 in a state in which the robot body 100 and the functional module 900 are coupled to each other. Specifically, in the module docking step (S10), the IR sensor 620 may detect the location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the front of the robot body 100 faces the robot station 2. Accordingly, the robot body 100 may face the robot station 2 in a state of being coupled to the functional module 900.

And, the controller 700 may detect an angle formed between the robot station 2 and the robot 1. That is, in the module docking step (S10), the controller 700 may draw a virtual line with respect to the forward traveling direction of the robot 1 to align it with the front surface of the robot station 2 where the lamp 21a is disposed.

Thereafter, the controller 700 may control the wheel motor MW so that the robot body 100 moves forward in a state in which the front surface of the robot body 100 faces the front surface of the robot station 2.

Accordingly, the robot body 100 may move forward to dock with the robot station 2.

The robot 1 may climb onto the base plate 22 of the robot station 2. In addition, the robot 1 may be docked with the robot station 2.

Specifically, when the robot 1 enters the robot station 2, the functional module 900 may dock with the robot station 2. That is, the terminal of the functional module 900 is electrically connected to the charging terminal 22a of the base plate 22 of the robot station 2, and the dust bin 940 of the functional module 900 may communicate with the dust collection hole 23a.

In the module separating step (S20), after the module docking step (S10), the robot body 100 and the functional module 900 may be separated from each other.

Specifically, in the module separating step (S20), the controller 700 may control the suspension motor MS to control the angle between the upper leg 210 and the lower leg 230 to increase. That is, the controller 700 may control the suspension motor MS so that the distance between the upper end portion of the upper leg 210 and the lower end portion of the lower leg 230 increases.

Through this control, the leg unit 200 bent at a predetermined angle is gradually straightened, so that the robot body 100 can be lifted. For example, a height of the robot body 100 from the ground in the module separating step (S20) is higher than that of the robot body 100 in the module docking step (S10).

Therefore, in the module separating step (S20), the robot body 100 may be moved upward so as to be away from the ground. That is, in the module separating step (S20), the length from the base plate 22 to the upper end of the robot body 100 may be increased.

At the same time, coupling between the robot body 100 and the functional module 900 may be released. For example, when the robot body 100 and the functional module 900 are coupled through an electromagnet, the controller 700 may cut off power applied to the electromagnet. As another example, when the robot body 100 and the functional module 900 are coupled through a mechanism such as a hook, the controller 700 may operate an actuator that moves the hook or the like to release the coupling.

Through this, the coupling between the module body 910 and the robot body 100 can be released. Accordingly, the functional module 900 is maintained in a state of being docked with the robot station 2, and the robot body 100 can be in a state capable of traveling.

In the robot starting step (S30), the robot body 100 may come out of the robot station 2 in a state in which the functional module 900 is separated.

In the robot starting step (S30), the controller 700 may control the wheel motor MW so that the robot body 100 moves backward to come out of the robot station 2 in a state in which the functional module 900 is separated.

Specifically, in a state in which the module separating step (S20) is completed, the front surface of the robot station 2 may be arranged to face the front surface of the robot body 100. At this time, a suction nozzle 920 may be disposed in front of the pair of wheels 310. That is, in a state in which the module separating step (S20) is completed, the front of the wheels 310 is blocked by the suction nozzle 920.

Therefore, the robot body 100 needs to move backward to escape from the base plate 22. Therefore, in the robot starting step (S30), the controller 700 may control the wheel motor MW to move the robot body 100 backward, thereby escaping from the base plate 22.

At the same time, the controller 700 may control the suspension motor MS to control the angle between the upper leg 210 and the lower leg 230 to decrease. That is, the controller 700 may control the suspension motor MS so that the distance between the upper end portion of the upper leg 210 and the lower end portion of the lower leg 230 decreases.

Through this, the straightened leg unit 200 may be bent to the original predetermined angle.

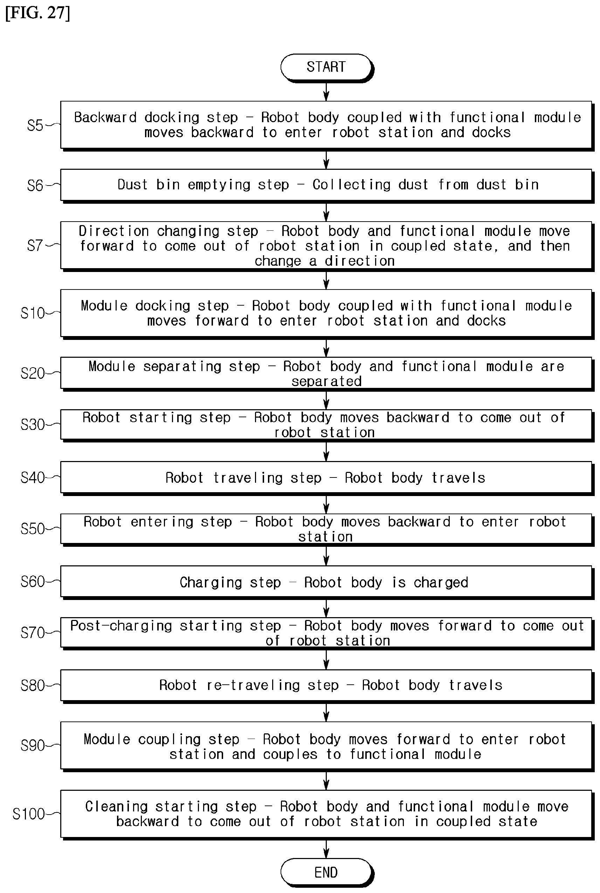

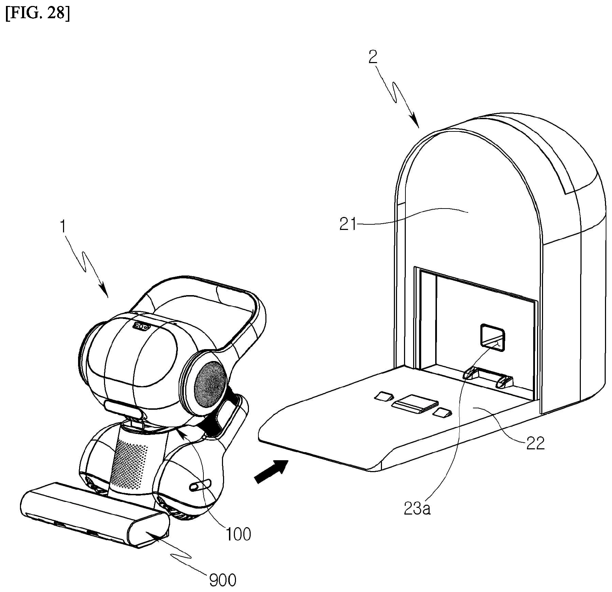

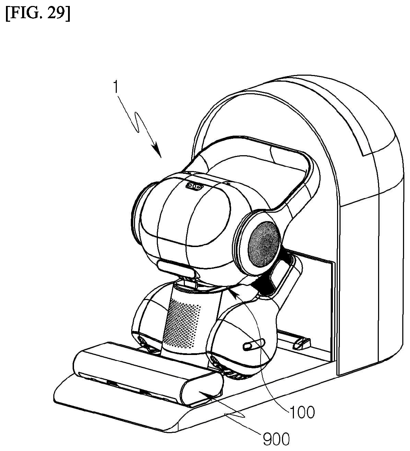

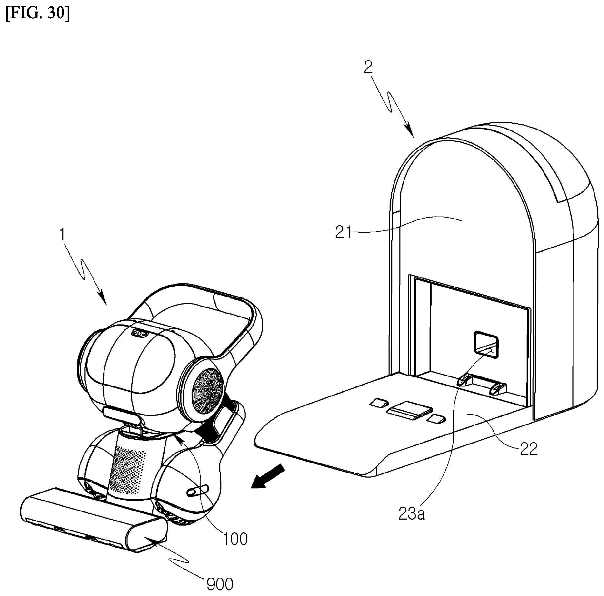

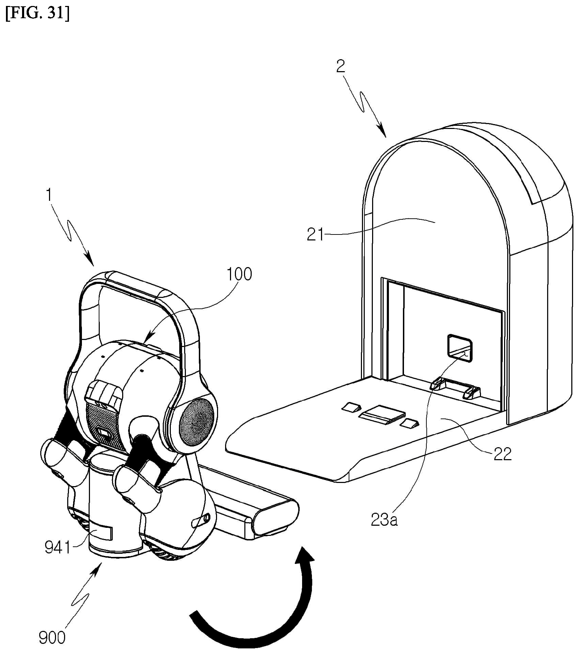

Meanwhile, FIG. 27 is a flowchart for describing a method for controlling a robot according to a seventh embodiment of the present disclosure, FIG. 28 is a view for describing a situation in which a robot body and a functional module are coupled to each other to enter a robot station in the method for controlling a robot according to the seventh embodiment of the present disclosure, FIG. 29 is a view for describing a situation in which the robot body and the functional module are docked with the robot station in the method for controlling a robot according to the seventh embodiment of the present disclosure, FIG. 30 is a view for describing a situation in which the robot body and the functional module come out of the robot station in the method for controlling a robot according to the seventh embodiment of the present disclosure, and FIG. 31 is a view for describing a situation in which the robot body and the functional module change a direction in the method for controlling a robot according to the seventh embodiment of the present disclosure.

Referring to FIGS. 14, 16 to 21, and 27 to 31, a method for controlling a robot according to the seventh embodiment of the present disclosure will be described as follows.

The method for controlling a robot according to the seventh embodiment may be control of the robot 1 when a dust discharge port (not shown) is formed on a rear side surface of the dust bin 940 of the functional module 900.

In the present embodiment, a dust collection hole 23a through which dust is collected may be formed in the station body 21 of the robot station 2.

To avoid repeated descriptions, the method for controlling a robot according to the first embodiment of the present disclosure may be applied unless otherwise specified.

The method for controlling a robot according to the seventh embodiment of the present disclosure includes a backward docking step (S5), a dust bin emptying step (S6), a direction changing step (S7), a module docking step (S10), a module separating step (S20), a robot starting step (S30), a robot traveling step (S40), a robot entering step (S50), a charging step (S60), a post-charging starting step (S70), a robot re-traveling step (S80), a module coupling step (S90), and a cleaning starting step (S100).

In the backward docking step (S5), the robot body 100 enters the robot station 2 in a state of being coupled to the functional module 900, so that the functional module 900 docks with the robot station 2. Specifically, in the backward docking step (S5), the IR sensor 620 may detect a location of the robot station 2. That is, the IR sensor 620 may detect infrared rays irradiated from the lamp 21a of the robot station 2 and transmit to the controller 700 that the robot station 2 exists.

At this time, the controller 700 may calculate the location of the robot station 2 based on the information received from the IR sensor 620. In addition, the controller 700 may control the wheel motor MW so that the rear of the robot body 100 faces the robot station 2. Accordingly, the robot body 100 may face the robot station 2 in a state of being coupled to the functional module 900.

And, the controller 700 may detect an angle formed between the robot station 2 and the robot 1. That is, in the module docking step (S10), the controller 700 may draw a virtual line with respect to a backward traveling direction of the robot 1 to align it with the front surface of the robot station 2 where the lamp 21a is disposed.

Thereafter, the controller 700 may control the wheel motor MW so that the robot body 100 moves backward in a state in which the rear surface of the robot body 100 faces the front surface of the robot station 2.

Accordingly, the robot body 100 may move backward to dock with the robot station 2. At this time, the robot 1 may confirm that it is docked at a correct position through contact with the charging terminal 22a provided in the robot station 2. Alternatively, the robot 1 may detect whether there is contact through a sensor (not shown) provided in the robot station 2, and may receive a signal from the robot station 2 that it has been docked at the correct position.

The robot 1 may climb onto the base plate 22 of the robot station 2. In addition, the robot 1 may be docked with the robot station 2.

At this time, the front surface of the robot station 2 may be arranged to face the dust bin 940.

Specifically, when the robot 1 enters the robot station 2, the functional module 900 may dock with the robot station 2. That is, the dust bin 940 of the functional module 900 may communicate with the dust collection hole provided in the station body 21.

**In** the dust bin emptying step (S6), after the backward docking step (S5), the robot station 2 may collect dust from the dust bin 940.

The controller 700 may operate the dust collection motor 23b of the robot station 2 through the communication unit 710. Accordingly, dust inside the dust bin 940 may be collected.

**In** the present embodiment, when the dust collection motor 23b is operated, the dust bin discharge door 941 disposed on the rear side surface of the dust bin 940 is opened, so that the dust discharge port (not shown) formed in the dust bin 940 communicates with the dust collection hole 23a, and dust inside the dust bin 940 flows rearward to be collected into the dust bag 23c inside the robot station 2. This has an advantage of reducing flow path loss compared to when the dust collection hole 23a is formed in the base plate 22.

After the dust inside the dust bin 940 is collected, the controller 700 may perform the direction changing step (S7).

In the direction changing step (S7), the robot body 100 and the functional module 900 may come out of the robot station 2 in a state in which the functional module 900 is coupled.

In the direction changing step (S7), the controller 700 may control the wheel motor MW so that the robot body 100 moves forward to come out of the robot station 2 in a state in which the functional module 900 is coupled.

In the direction changing step (S7), the controller 700 may control the wheel motor MW to move the robot body 100 forward, thereby escaping from the base plate 22.

After the robot 1 escapes from the robot station 2, the controller 700 may rotate the robot body 100 and the functional module 900. That is, the controller 700 may detect that the robot body 100 descends the inclined base plate 22 through the sensor unit 600, and after detecting that the robot body 100 has descended to the floor, may control the wheel motor MW.

Through this, the robot 1 may rotate 180 degrees. As an example, the robot 1 may rotate 180 degrees in place. As another example, the robot 1 may change a direction while drawing a curve.

Accordingly, the front surface of the robot body 100 may face the robot station 2.

Thereafter, the module docking step (S10), the module separating step (S20), the robot starting step (S30), the robot traveling step (S40), the robot entering step (S50), the charging step (S60), the post-charging starting step (S70), the robot re-traveling step (S80), the module coupling step (S90), and the cleaning starting step (S100) of the present disclosure may be performed.

Meanwhile, the module docking step (S10), the module separating step (S20), the robot starting step (S30), the robot traveling step (S40), the robot entering step (S50), the charging step (S60), the post-charging starting step (S70), the robot re-traveling step (S80), the module coupling step (S90), and the cleaning starting step (S100) of the present embodiment are the same as those of the first embodiment of the present disclosure, and thus repeated descriptions thereof will be omitted, and the contents of the first embodiment will be applied.

Although the present disclosure has been described in detail through specific embodiments, this is intended to specifically describe the present disclosure, and it is apparent that the present disclosure is not limited thereto, and the present disclosure can be modified or improved by those skilled in the art without departing from the technical spirit of the present disclosure.

All simple modifications or changes of the present disclosure fall within the scope of the present disclosure, and the specific scope of the present disclosure will be made clear by the appended claims.

## Claims

1. A robot comprising:
a robot body in which a motor and a battery are accommodated;
a pair of leg units provided on the robot body;
a pair of wheels rotatably coupled to each of the pair of leg units; and
a functional module detachably coupled to the robot body to be moved together with the robot body,
wherein a direction in which the robot body enters a robot station in a state of being coupled to the functional module is different from a direction in which only the robot body enters the robot station.

2. The robot of claim 1, wherein the robot body moves forward to enter the robot station in a state of being coupled to the functional module.

3. The robot of claim 1, wherein the robot body moves backward to enter the robot station in a state of being separated from the functional module.

4. The robot of claim 1, wherein a location of the functional module during traveling and a location thereof during charging are different with respect to the robot body.

5. The robot of claim 4, wherein the functional module includes:
a suction nozzle in which a suction port is formed; and
a dust bin configured to store dust sucked through the suction nozzle,
wherein the suction nozzle is disposed in front of the robot body during traveling, and is disposed behind the robot body during charging.

6. A robot comprising:
a robot body in which a motor and a battery are accommodated;
a pair of leg units provided on the robot body;
a pair of wheels rotatably coupled to each of the pair of leg units; and
a functional module detachably coupled to the robot body to be moved together with the robot body,
wherein a location of the functional module during traveling and a location thereof during charging are different with respect to the robot body.

7. A robot for charging by docking with a robot station including a base plate and a lamp configured to generate a light beam, the robot comprising:
a robot body in which a motor and a battery are accommodated;
a pair of leg units provided on the robot body; and
a pair of wheels rotatably coupled to each of the pair of leg units,
wherein the robot body is charged in a state in which the lamp is disposed behind the robot body.

8. The robot of claim 7, further comprising a functional module detachably coupled to the robot body to be moved together with the robot body,
wherein the functional module includes:
a suction nozzle in which a suction port is formed; and
a dust bin configured to store dust sucked through the suction nozzle,
wherein, during charging, a distance between the suction nozzle and the lamp is shorter than a distance between the dust bin and the lamp.

9. A method for controlling a robot including a robot body and a functional module detachably coupled to the robot body to be moved together with the robot body, the method comprising:
a travel starting step of the robot body coming out of the robot station in a state in which the functional module is separated; and
a robot entering step of the robot body entering the robot station, wherein, in the robot entering step, the robot body moves backward to enter the robot station.

10. The method of claim 9, wherein, in the travel starting step, the robot body moves backward to come out of the robot station.

11. The method of claim 9, further comprising, before the travel starting step, a module docking step of entering a robot station in a state in which the robot body and the functional module are coupled to each other to dock the functional module with the robot station,
wherein, in the module docking step, the robot body moves forward to dock with the robot station.

12. The method of claim 11, further comprising a charging step of charging the robot body after the robot entering step,
wherein a direction in which the robot body is placed in the charging step and a direction in which the robot body is placed in the module docking step are different from each other.

13. The method of claim 9, further comprising a cleaning starting step of the robot body and the functional module coming out of the robot station in a state of being coupled to each other,
wherein, in the cleaning starting step, the robot body moves backward to come out of the robot station.
